(19) Europäisches Patentamt
European Patent Office
Office européen des brevets

(11) Veröffentlichungsnummer: **0 112 285**
**B1**

# (12) EUROPÄISCHE PATENTSCHRIFT

(45) Veröffentlichungstag der Patentschrift: **18.03.87**

(51) Int. Cl.⁴: **C 09 B 62/51**, D 06 P 3/66

(21) Anmeldenummer: **83810523.7**

(22) Anmeldetag: **14.11.83**

(54) **Reaktivfarbstoffe, deren Herstellung und Verwendung.**

(30) Priorität: **19.11.82 CH 6747/82**

(43) Veröffentlichungstag der Anmeldung: **27.06.84 Patentblatt 84/26**

(45) Bekanntmachung des Hinweises auf die Patenterteilung: **18.03.87 Patentblatt 87/12**

(84) Benannte Vertragsstaaten: **CH DE FR GB IT LI**

(56) Entgegenhaltungen:
**FR-A-1 546 447**
**US-A-3 139 422**

(73) Patentinhaber: **CIBA- GEIGY AG, Klybeckstrasse 141, CH- 4002 Basel (CH)**

(72) Erfinder: **Schwander, Hansrudolf, Dr., Unterm Schellenberg 189, CH- 4125 Riehen (CH)**

**EP 0 112 285 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Reaktivfarbstoffe werden in grossem Umfang für das Färben und Bedrucken von Textilien aus Fasermaterialien eingesetzt. Angesichts der steigenden Anforderungen an Reaktivfärbungen in bezug auf Wirtschaftlichkeit, Applikationstechnik und Echtheitsniveau ist der erreichte technische Stand aber vielfach nicht voll befriedigend.

Der vorliegenden Erfindung lag die Aufgabe zugrunde, neue verbesserte Reaktivfarbstoffe zu finden, die eine hohe Reaktivität und ein gutes Aufbauvermögen besitzen, die mit hoher Fixierausbeute gefärbt werden können, die vor allem für das Ausziehfärbeverfahren geeignet sind, und die auf cellulosehaltigem Fasermaterial nass- und lichtechte Färbungen ergeben.

Es hat sich gezeigt, dass die weiter unten definierten neuen Reaktivfarbstoffe diesen Anfordeiungen genügen.

Gegenstand der Erfindung sind Reaktivfarbstoffe der Formel

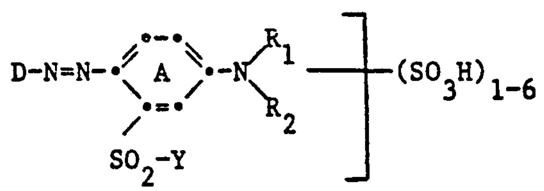

(1),

worin D der Rest einer Diazokomponente, $R_1$ und $R_2$ unabhängig voneinander eine gegebenenfalls substituierte Alkyl- oder Alkenylgruppe, Y ein Rest $-CH{=}CH_2$ oder $-CH_2CH_2-X$, und X eine faserreaktive Abgangsgruppe ist, und der Benzolring A weitersubstituiert sein kann.

Der Rest D ist insbesondere der Rest einer aromatischen oder heterocyclischen Diazokomponente, beispielsweise ein Rest der Benzol-, Naphthalin-, Anthrachinon-, Thiazol-, Thiophen-, Imidazol-, Pyridin-, Indazol-, Pyrazol-, Triazol-, Benztriazol-, Thiadiazol-, Isothiazol-, Benzthiazol-, Benzisothiazol-, Phthalimid- oder Phthalhydrazid-Reihe. Diese Reste können einfach oder mehrfach, gleich oder verschieden substituiert sein. Als Substituenten kommen z.B. in Betracht: $C_{1-4}$-Alkyl, d.h. Methyl, Aethyl, Propyl, Isopropyl, Butyl, Isobutyl, sec.-Butyl oder tert.-Butyl, $C_{1-4}$-Alkoxy, d.h. Methoxy, Aethoxy, Propyloxy, Isopropyloxy, Butyloxy, Isobutyloxy, sec.-Butyloxy oder tert.-Butyloxy, Carboxy, Halogen, wie Fluor, Chlor oder Brom, Cyan, Trifluormethyl, Nitro, $C_{1-4}$-Alkylsulfonyl, wie Methylsulfonyl, Aethylsulfonyl, Propylsulfonyl, Isopropylsulfonyl oder Butylsulfonyl, Sulfamoyl, N-$C_{1-10}$-Alkylaminosulfonyl, wie Aethylaminosulfonyl, Butylaminosulfonyl oder Octylaminosulfonyl, N-(Phenyl-$C_{1-4}$-alkyl)-aminosulfonyl, wie Benzylaminosulfonyl oder Phenäthylaminosulfonyl, N,N-Di-$C_{1-6}$-alkylaminosulfonyl, wie N,N-Diäthylaminosulfonyl oder N-Methyl-N-äthyl-aminosulfonyl, Cyclohexylaminosulfonyl, N-$C_{1-4}$ Alkyl-N-cyclohexylaminosulfonyl, wie N-Methyl-N-cyclohexylaminosulfonyl oder N-Propyl-N-cyclohexylaminosulfonyl, Phenylaminosulfonyl, das im Phenylring weitersubstituiert sein kann, z.B. durch $C_{1-4}$-Alkyl, $C_{1-4}$-Alkoxy, Carboxy, Halogen oder Sulfo, Naphthylaminosulfonyl, das im Naphthalinkern weitersubstituiert sein kann, z.B. durch Hydroxy, Nitro oder Sulfo, Phenylsulfonyl, das im Phenylring durch $C_{1-4}$-Alkyl, $C_{1-4}$-Alkoxy, Carboxy oder Halogen weitersubstituiert sein kann, wie p-Methylphenylsulfonyl oder p-Methoxyphenylsulfonyl, Naphthylsulfonyl, Phenoxysulfonyl, das im Phenylring durch $C_{1-4}$-Alkyl, $C_{1-4}$-Alkoxy, Carboxy oder Halogen substituiert sein kann, Phenylsulfonylaminosulfonyl, das im Phenylring durch $C_{1-4}$-Alkyl, $C_{1-4}$-Alkoxy, Carboxy oder Halogen substituiert sein kann, Benzoyl, das im Benzolring durch $C_{1-4}$-Alkyl, $C_{1-4}$-Alkoxy, Carboxy oder Halogen substituiert sein kann, N-$C_{1-10}$-Alkylaminocarbonyl, N,N-Di-$C_{1-6}$-alkylaminocarbonyl, Phenylaminocarbonyl, das im Phenylring durch $C_{1-4}$-Alkyl, $C_{1-4}$-Alkoxy, Carboxy oder Halogen substituiert sein kann, Phenylazo, das im Phenylring durch $C_{1-4}$-Alkyl, $C_{1-4}$-Alkoxy, Carboxy, Halogen, Sulfomethyl oder Sulfo substituiert sein kann, Naphthylazo, das im Naphthalinkern durch Sulfo oder Hydroxy substituiert sein kann, β-Hydroxyäthylsulfonyl, β-Sulfatoäthylsulfonyl, Vinylsulfonyl, Hydroxy-$C_{1-4}$-alkylaminosulfonyl, Sulfato-$C_{1-4}$-alkyl-aminosulfonyl wie β-Sulfatoäthylaminosulfonyl oder γ-Sulfatopropylaminosulfonyl, N,N-Bis-sulfato-$C_{1-4}$-alkylaminosulfonyl, wie N,N-Bis-β-sulfatoäthylaminosulfonyl oder N,N-Bis-β-sulfatopropylaminosulfonyl, N-$C_{1-4}$-Alkyl-N-β-sulfatoäthylaminosulfonyl, wie N-Methyl-N-β-sulfatoäthylaminosulfonyl oder N-Aethyl-N-β-sulfatoäthylaminosulfonyl, Phenyl, das durch $C_{1-4}$-Alkyl, $C_{1-4}$-Alkoxy, Carboxy, Halogen oder Sulfo substituiert sein kann, wie p-Methylphenyl oder Sulfophenyl, $C_{1-4}$-Alkylthio, wie Methylthio oder n-Butylthio, Phenyl-$C_{1-4}$-Alkylthio, wie Benzylthio oder Phenäthylthio, Sulfato-$C_{1-4}$-alkylthio, wie β-Sulfatoäthylthio oder β-Sulfatopropylthio, Benz-thiazolyl-(2), das im Benzolring durch $C_{1-4}$-Alkyl, $C_{1-4}$-Alkoxy, Carboxy, Halogen oder Sulfo substituiert sein kann, wie 6-Methyl-benzthiazolyl-(2) oder 6-Methyl-7-sulfobenzthiazolyl-(2) und $C_{1-4}$-Alkanoylamino, wie Acetylamino oder Propionylamino, das durch das Vorhandensein von abspaltbaren Halogenatomen auch faserreaktiv sein kann, wie z.B. bei Chloracetylamino, α,β-Dichlorpropionylamino oder α,β-Dibrompropionylamino.

In bevorzugten Reaktivfarbstoffen der Formel (1) ist D der Rest einer Diazokomponente der Benzolreihe, Anthrachinonreihe oder heterocyclischen Reihe.

Die Substituenten $R_1$ und $R_2$ sind unabhängig voneinander Alkyl- oder Alkenylgruppen mit kürzerer, z.B. $C_{1-4}$, oder auch längerer, z.B. $C_{10-20}$, Kohlenstoffkette, die gerade oder verzweigt sein kann, und die

weitersubstituiert sein kann, z.B. durch $C_{1-4}$-Alkoxy, Hydroxy-$C_{1-4}$-alkoxy, $C_{1-2}$-Alkoxy-$C_{1-2}$-alkoxy, $C_{1-4}$-Alkoxycarbonyl, Carboxy, Cyan, Hydroxy, Halogen, Sulfato, Thiosulfato oder Sulfo. Vorzugsweise sind $R_1$ und $R_2$ gleich. Beispiele für $R_1$ und $R_2$ sind: Methyl, Aethyl, Propyl, Isopropyl, Butyl, Isobutyl, sec.-Butyl, tert.-Butyl, n-Hexyl, n-Octyl, n-Decyl, n-Dodecyl, Vinyl, 1-Propenyl, 2-Propenyl, Isopropenyl, 2-Butenyl, 1,3-Butadienyl, 2-Pentenyl, β-Methoxyäthyl, β-Aethoxyäthyl, β-Methoxypropyl, β-(β-Hydroxyäthoxy)äthyl, β-(β-Aethoxyäthoxy)äthyl, Methoxycarbonylmethyl, Aethoxycarbonylmethyl, Carboxymethyl, β-Carboxyäthyl, β-Carboxypropyl β-Cyanäthyl, β-Hydroxyäthyl, β-Hydroxybutyl, β-Chloräthyl, γ-Chlorpropyl, γ-Brompropyl, β-Chlor-2-propenyl, β-Brom-2-propenyl, γ-Chlor-2-propenyl, γ-Chlor-2-butenyl, β-Sulfatoäthyl, β-Sulfato-Propyl, β-Sulfatobutyl, β-Thiosulfatoäthyl, Sulfomethyl, β-Sulfoäthyl und γ-Sulfopropyl.

Als Beispiele für den Aminorest $-NR_1R_2$ seien genannt: N,N-Dimethylamino, N,N-Diäthylamino, N,N-Dipropylamino, N,N-Diisopropylamino, N,N-Di-n-butylamino, N,N-Dioctylamino, N,N-Didecylamino, N,N-Di-2-propenylamino, N-Methyl-N-äthylamino, N-Aethyl-N-butylamino, N,N-Di-β-methoxyäthylamino, N,N-Di-β-äthoxyäthylamino, N,N-Di-β-carboxyäthylamino, N,N-Di-β-cyanäthylamino, N,N-Di-β-hydroxyäthylamino, N,N-Di-β-hydroxypropylamino, N,N-Di-β-hydroxybutylamino, N,N-Di-β-chloräthylamino, N,N-Di-β-chlor-2-propenylamino, N,N-Di-β-brom-2-propenylamino, N,N-Di-γ-chlor-2-propenylamino, N,N-Di-γ-chlor-2-butenylamino, N,N-Di-β-hydroxy-γ-chlorpropylamino, N,N-Di-β-sulfatoäthylamino, N,N-Di-β-sulfatopropylamino, N,N-Di-β-sulfatobutylamino, N,N-Di-β-sulfato-γ-chlorpropylamino, N,N-Di-β-thiosulfatoäthylamino, N,N-Di-β-sulfoäthylamino und N,N-Di-γ-sulfopropylamino.

Bevorzugt sind Reaktivfarbstoffe der Formel (1), worin $R_1$ und $R_2$ unabhängig voneinander $C_{1-6}$-Alkyl oder $C_{2-6}$-Alkenyl ist, worin die Alkyl- oder Alkenylgruppen durch Halogen, Sulfato oder Sulfo substituiert sein können.

Die faserreaktive Abgangsgruppe X ist ein unter alkalischen Bedingungen abspaltbarer anorganischer oder organischer Rest.

Als ein unter alkalischen Bedingungen abspaltbarer anorganischer oder organischer Rest kommt eine der folgenden anionisch abspaltbaren Gruppen in Betracht:

Gruppen in Betracht:

$-OSO_3H$, $-SSO_3H$, $-OCOCH_3$, $-OPO_3H_2$, 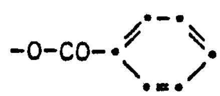

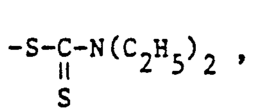 , 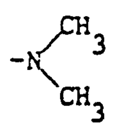 , 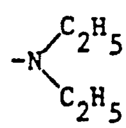 ,

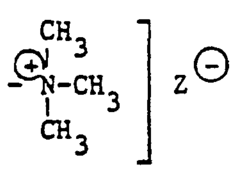 (Z = Halogen),

-Cl, -Br, -F,

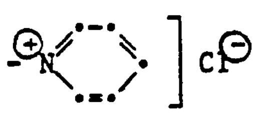 , 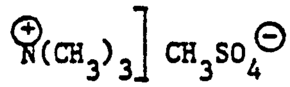

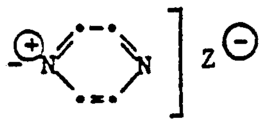 (Z = Halogen),

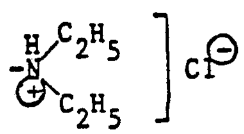 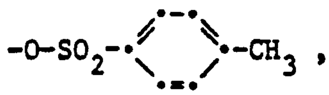 ,

$-O-SO_2-N(CH_3)_2$, 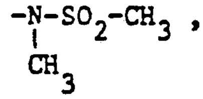 ,

$-O-SO_2-CH_3$, $-S-C{\equiv}N$,

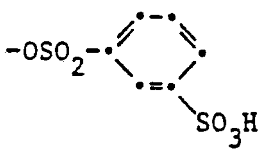 , 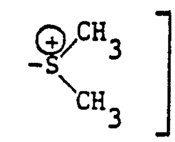 $CH_3SO_4^{\ominus}$ ,

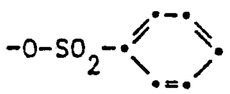 ,

$-OOCCCl_3$ , $-OOCCHCl_2$ , $-OOCCH_2Cl$ ,

$-O-O_2SR$ (R = Alkyl oder Aryl) , $-O-SO_2-N(C_2H_5)_2$,

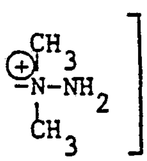 $Cl^{\ominus}$ , 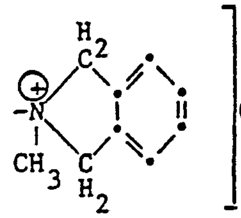 $Cl^{\ominus}$

Bevorzugt sind Reaktivfarbstoffe der Formel (1), worin Y ein Rest $-CH_2CH_2-X$, und X Sulfato ist.

Als Beispiele für weitere Substituenten am Benzolring A seien genannt: Alkylgruppen mit 1 bis 4 Kohlenstoffatomen, wie Methyl, Aethyl, Propyl, Isopropyl und Butyl, Alkoxygruppen mit 1 bis 4 Kohlenstoffatomen, wie Methoxy, Aethoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo.

Die Reaktivfarbstoffe der Formel (1) enthalten 1 bis 6 Sulfogruppen. Diese können direkt an den aromatischen oder heterocyclischen Kern des Restes D, an den Benzolring A oder an die Gruppen $R_1$ oder $R_2$ gebunden sein, oder sie können sich an einem Substituenten befinden, so wie es in der Erläuterung von möglichen Substituenten im Rest D angegeben ist, z.B. wie im Sulfomethyl- oder Sulfophenyl-Substituenten. Die Sulfogruppen können aber auch Teil von Sulfato- oder Thiosulfatogruppen sein, und sich somit auch in der faserreaktiven Abgangsgruppe X befinden. Vorzugsweise enthalten auch $R_1$ und $R_2$ eine Sulfo- bzw. Sulfatogruppe.

Beispiele für erfindungsgemäss verwendbare Diazo- und Kupplungskomponenten sind weiter unten angegeben.

Bevorzugte Untergruppen der Reaktivfarbstoffe der Formel (1) sind:

a) Reaktivfarbstoffe der Formel (1), worin D ein Benzolrest ist, der durch $C_{1-4}$-Alkyl, $C_{1-4}$-Alkoxy, Carboxy, Halogen, Cyan, Trifluormethyl, Nitro, $C_{1-4}$-Alkylsulfonyl, N-$C_{1-10}$-Alkylaminosulfonyl, N,N-Di-$C_{1-6}$-alkylaminosulfonyl, Cyclohexylaminosulfonyl, N-$C_{1-4}$-Alkyl-N-cyclohexylaminosulfonyl, Phenylaminosulfonyl, das im Phenylring durch $C_{1-4}$-Alkyl, $C_{1-4}$-Alkoxy, Carboxy oder Halogen substituiert sein kann, Phenylsulfonyl, das im Phenylring durch $C_{1-4}$-Alkyl, $C_{1-4}$-Alkoxy, Carboxy oder Halogen substituiert sein kann, Phenoxysulfonyl, das im Phenylring durch $C_{1-4}$-Alkyl, $C_{1-4}$-Alkoxy, Carboxy oder Halogen substituiert sien kann, Phenylsulfonylaminosulfonyl, das im Phenylring durch $C_{1-4}$-Alkyl, $C_{1-4}$-Alkoxy, Carboxy oder Halogen substituiert sein kann, Benzoyl, das im Benzolring durch $C_{1-4}$-Alkyl, $C_{1-4}$-Alkoxy, Carboxy oder Halogen substituiert sein kann, N-$C_{1-10}$-Alkylaminocarbonyl, N,N-Di-$C_{1-6}$-alkylaminocarbonyl, Phenylaminocarbonyl, das im Phenylring durch $C_{1-4}$-Alkyl, $C_{1-4}$-Alkoxy, Carboxy oder Halogen substituiert sein kann, Phenylazo, das im Phenylring durch $C_{1-4}$-Alkyl, $C_{1-4}$-Alkoxy, Carboxy, Halogen oder Sulfo substituiert sein kann, β-Hydroxyäthylsulfonyl, β-Sulfatoäthylsulfonyl, Vinylsulfonyl, β-Sulfatoäthylaminosulfonyl, N,N-Bis-β-Sulfatoäthylamino-sulfonyl, N-$C_{1-4}$-Alkyl-N-β-sulfatoäthylaminosulfonyl, Benzthiazolyl-(2), das im Benzolring durch $C_{1-4}$-Alkyl, $C_{1-4}$-Alkoxy, Carboxy, Halogen oder Sulfo substituiert sein kann, oder Sulfo substituiert sein kann.

b) Reaktivfarbstoffe der Formel (1) oder gemäss a), worin $R_1$ und $R_2$ Butyl, 2-Propenyl, β-Chlor-2-propenyl, β-Brom-2-propenyl, γ-Chlor-2-propenyl, γ-Chlor-2-butenyl, β-Sulfatoäthyl, β-Sulfatopropyl, β-Sulfatobutyl, β-Sulfato-γ-chlorpropyl, β-Sulfoäthyl oder γ-Sulfopropyl ist.

c) Reaktivfarbstoffe gemäss b), der Formel

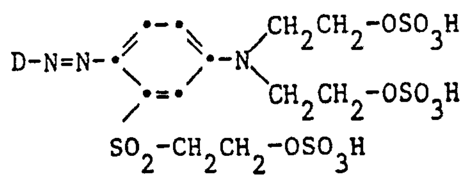

(2),

worin D der Rest einer Diazokomponente der Benzolreihe, Anthrachinonreihe oder heterocyclischen Reihe ist.

d) Reaktivfarbstoffe gemäss b) oder c), worin D ein gegebenenfalls substituierter Anthrachinon-Rest ist.

e) Reaktivfarbstoffe gemäss d), worin D ein 1-Anthrachinonyl-Rest ist.

f) Reaktivfarbstoffe gemäss b) oder c), worin D ein gegebenenfalls substituierter Phthalimid-, Benzthiazol-, Benzisothiazol-, Thiadiazol- oder Phthalhydrazid-Rest ist.

g) Reaktivfarbstoffe gemäss f), worin D ein N-Cyclohexyl-phthalimid-(3)- oder -(4)-Rest, ein Benzthiazol-(2)-Rest, der im Benzolring durch $C_{1-4}$-Alkylsulfonyl oder Halogen substituiert sein kann, ein Benzthiazol-(5)- oder -(6)-Rest, der in 2-Stellung durch $C_{1-4}$-Alkylsulfonyl substituiert sein kann, ein 2,1-Benzisothiazol-(3)-Rest, der im Benzolring durch Halogen, Nitro oder Sulfo substituiert sein kann, ein 1,3,4-Thiadiazol-(5)-Rest, der in 2-Stellung durch Phenyl, $C_{1-4}$-Alkylthio, Benzylthio oder β-Sulfatoäthylthio substituiert sein kann, ein 1,2,4-Thiadiazol-(5)-Rest, der in 3-Stellung durch Phenyl oder Sulfophenyl substituiert sein kann, oder ein Phthalhydrazid-(5)-, -(6)-, -(7)- oder -(8)-Rest, der an einem Stickstoffatom durch Phenyl substituiert sein kann, ist.

h) Reaktivfarbstoffe gemäss b), der Formel

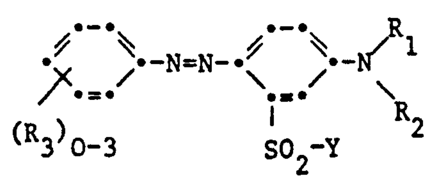

(3),

worin $R_3$ für 0 bis 3 Substituenten steht, die unabhängig voneinander Halogen, Cyan, Trifluormethyl, $C_{1-4}$-Alkylsulfonyl, N-$C_{1-8}$-Alkylaminosulfonyl, N,N-Di-$C_{1-4}$-alkylaminosulfonyl, Cyclohexylaminosulfonyl, N-Methyl-N-cyclohexylaminosulfonyl, Phenylaminosulfonyl, Carboxyphenylaminosulfonyl, Phenylsulfonyl, Methylphenylsulfonyl, Phenoxysulfonyl, Chlorphenoxysulfonyl, Phenylsulfonylaminosulfonyl, Benzoyl, $C_{1-4}$-Alkylbenzoyl, Carboxybenzoyl, N,N-Di-$C_{1-4}$-alkylaminocarbonyl, Phenylaminocarbonyl, Phenylazo, Sulfophenylazo, β-Hydroxyäthylsulfonyl, β-Sulfatoäthylsulfonyl, Vinylsulfonyl, β-Sulfatoäthylaminosulfonyl, N,N-Bis-β-sulfatoäthylaminosulfonyl, N-Methyl-N-β-sulfatoäthylaminosulfonyl, 6-Methylbenzthiazolyl-(2), 6-Methyl-7-sulfobenzthia-zolyl-(2) oder Sulfo sein können, $R_1$, $R_2$ und Y die gleichen Bedeutungen haben wie unter b), und die Reaktivfarbstoffe der Formel (3) 1 bis 6 $SO_3H$ Gruppen enthalten.

i) Reaktivfarbstoff gemäss h), der Formel

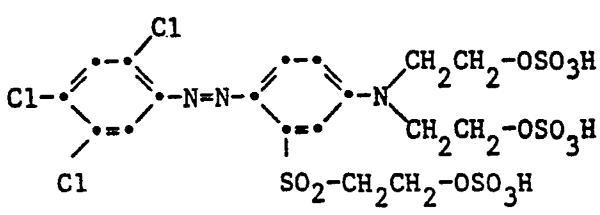

(4).

j) Reaktivfarbstoff gemäss h), der Formel

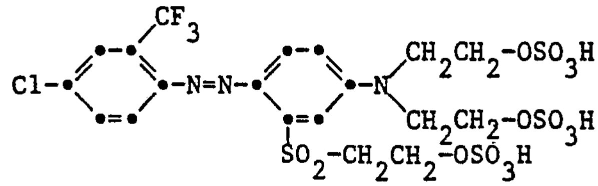

(4a).

Die Farbstoffe der Formel (1) sind faserreaktiv.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Das Verfahren zur Herstellung der Reaktivfarbstoffe der Formel (1) ist dadurch gekennzeichnet, dass man eine Diazokomponente der Formel

$$D - NH_2 \quad (5)$$

diazotiert und auf eine Kupplungskomponente der Formel

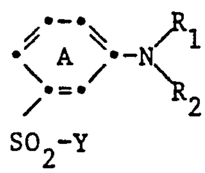

(6),

worin Y ein Rest $-CH=CH_2$ oder $-CH_2CH_2-X$, und X eine faserreaktive Abgangsgruppe oder eine Vorstufe derselben ist, und $R_1$, $R_2$ und A die unter Formel (1) angegebenen Bedeutungen haben, kuppelt, und gegebenenfalls die gewünschte faserreaktive Abgangsgruppe einführt und/oder eine weitere Umwandlungsreaktion anschliesst, wobei die Komponenten der Formeln (5) und (6) so auszuwählen sind und/oder die weiteren Verarbeitungsstufen so auszuführen sind, dass der Endfarbstoff 1 bis 6 $SO_3H$ Gruppen enthält.

Bei dem im vorangehenden beschriebenen Verfahren können die einzelnen Verfahrensschritte in unterschiedlicher Reihenfolge, gegebenenfalls teilweise auch gleichzeitig, ausgeführt werden. Dabei sind verschiedene Verfahrensvarianten möglich. Im allgemeinen führt man die Umsetzung schrittweise nacheinander aus.

Dabei hängt es von der Struktur der Ausgangsstoffe ab, welche der möglichen Verfahrensvarianten die besten Resultate ergeben, oder unter welchen speziellen Bedingungen, z.B. bei welcher Temperatur, die Reaktion am vorteilhaftesten auszuführen ist.

Die Diazotierung der Diazokomponenten der Formel (5) erfolgt in der Regel durch Einwirkung salpetriger Säure in wässrig-mineralsaurer Lösung bei tiefer Temperatur, die Kupplung auf die Kupplungskomponente der Formel (6) bei neutralen bis sauren pH-Werten.

Vorzugsweise verwendet man Diazokomponenten der Formel (5), worin Y ein Rest $-CH_2CH_2-X$ und X eine Hydroxy- oder Sulfatogruppe ist. Die Einführung der Sulfatogruppe als Rest X geschieht durch Sulfatierung der entsprechenden Hydroxyverbindung, sie erfolgt vorzugsweise durch Umsetzung mit konzentrierter Schwefelsäure bei 0°C bis mässig erhöhter Temperatur.

Vorzugsweise erfolgt die Sulfatierung durch Eintragen der betreffenden Verbindung in Schwefelsäuremonohydrat bei Temperaturen zwischen 5 bis 15°C.

Die Sulfatierung kann vor oder nach der Kupplung ausgeführt werden. Falls die Reste D, $R_1$ oder $R_2$ noch weitere aliphatische gebundene Hydroxygruppen enthalten, können diese bei nachträglicher Sulfatierung ebenfalls in Sulfatogruppen übergeführt werden.

Die Kupplungskomponenten der Formel (6) müssen mindestens eine Sulfogruppe oder einen aliphatischen sulfatierbaren Substituenten, wie z.B. eine Gruppe $-C_2H_4-OH$, enthalten.

Die Einführung eines anderen unter alkalischen Bedingungen abspaltbaren anorganischen oder organischen Restes für X in eine Verbindung der Formel (1) anstelle einer Hydroxy- oder Sulfatogruppe, beispielsweise

einer Thiosulfato-, Methylmercapto-, Methylsulfonyl- oder Phosphatogruppe, erfolgt in an sich bekannter Weise.

In der so erhaltenen Monoazoverbindung der Formel (1) kann die Gruppe X gegebenenfalls durch Umacylierung oder dergleichen variiert werden, indem man die Monoazoverbindung der Formel (1) hydrolysiert und anschliessend mit einer Verbindung, mit der man eine andere Gruppe X einführt, umsetzt.

Reaktivfarbstoffe der Formel (1) bzw. Diazokomponenten der Formel (5), worin Y die Vinylgruppe $-CH=CH_2$ ist, werden durch Abspaltung von Schwefelsäure aus den entsprechenden Verbindungen, worin Y ein Rest $-CH_2CH_2-X$ und X die Sulfatogruppe ist, erhalten. Eine solche Abspaltung erfolgt im allgemeinen auch unter den für Vinylsulfonfarbstoffen anwendbaren Färbebedingungen.

Gegebenenfalls kann eine freie Aminogruppe im Rest D nach der Kupplung mit einem Acylierungs- oder Alkylierungsmittel in eine Acylamino- oder Alkylaminogruppe umgewandelt werden.

Als ein derartiges Acylierungsmittel kommt z.B. ein Alkanoylhalogenid in Betracht, wie Acetylchlorid oder Propionylchlorid. Das Acylierungsmittel kann im Alkanoylrest noch austauschbare Substituenten enthalten, so dass der eingeführte Acylrest faserreaktiv ist, Beispiele dafür sind: Chloracetylchlorid, β-Chlorpropionylchlorid, α,β-Dichlorpropionylchlorid und α,β-Dibrompropionylchlorid. Ferner kommen auch andere faserreaktive Acylierungsmittel in Frage, wie Halogentriazine oder Halogenpyrimidine usw. Die Kondensation einer Diazokomponente der Formel (5), die noch eine freie Aminogruppe enthält, mit einem Acylierungsmittel kann auch vor der Kupplung mit einer Kupplungskomponente der Formel (6) erfolgen.

Falls eine Diazokomponente der Formel (5) einen über eine Aminogruppe gebundenen Acylrest enthält, welcher aliphatisch gebundene Hydroxygruppen enthält, können die letzteren bei einer nachträglichen Sulfatierung ebenfalls in Sulfatogruppen übergeführt werden.

Die Kupplungskomponenten der Formel (6), worin $R_1$, $R_2$, Y und A die unter Formel (1) angegebenen Bedeutungen haben, sind neu und stellen einen weiteren Gegenstand der Erfindung dar.

Die Verbindungen der Formel (6) können erhalten werden, indem man Verbindungen der Formel

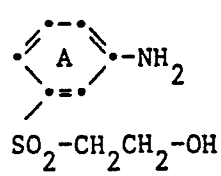

(9)

mit Alkylierungsmitteln umsetzt, und gegebenenfalls die gewünschte faserreaktive Abgangsgruppe einführt und/oder eine weitere Umwandlungsreaktion anschliesst.

Die Ausgangsverbindungen der Formel (9) sind bekannt. Die Alkylierung der Aminogruppe erfolgt nach gebräuchlichen Methoden der N-Alkylierung durch Substitution, z.B. mittels Alkylhalogeniden, oder Anlagerung, z.B. mittels Epoxiden. Geeignete Epoxide sind z.B. Aethylenoxid und Epichlorhydrin.

Das durch Alkylierung einer Verbindung der Formel (9) gewonnene Produkt kann mit einer diazotierten Diazokomponente gekuppelt und anschliessend sulfatiert werden, wobei auch weitere aliphatisch gebundene Hydroxygruppen in Sulfatogruppen übergeführt werden. Die Kupplungskomponente kann aber auch vor der Kupplung sulfatiert werden.

Bevorzugt sind:

a) Verbindungen der Formel (6), worin $R_1$ und $R_2$ unabhängig voneinander $C_{1-6}$-Alkyl oder $C_{2-6}$-Alkenyl ist, worin die Alkyl- oder Alkenylgruppen durch Halogen, Hydroxy, Sulfato oder Sulfo substituiert sein können.

b) Verbindungen der Formel (6) gemäss a), worin Y ein Rest $-CH_2CH_2-X$, und X Hydroxy oder Sulfato ist.

c) Verbindungen gemäss b), worin $R_1$ und $R_2$ Butyl, 2-Propenyl, β-Chlor-2-propenyl, β-Brom-2-propenyl, γ-Chlor-2-propenyl, γ-Chlor-2-butenyl, β-Sulfatoäthyl, β-Sulfatopropyl, β-Sulfatobutyl, β-Sulfato-γ-chlorpropyl, β-Sulfoäthyl oder γ Sulfopropyl ist.

d) Verbindungen gemäss c) worin $R_1$ und $R_2$ β-Hydroxyäthyl oder β-Sulfoäthyl, Y ein Rest $-CH_2CH_2-X$ und X Hydroxy oder Sulfato ist, und der Benzolring A keine weiteren Substituenten enthält.

e) Verbindung gemäss d), der Formel

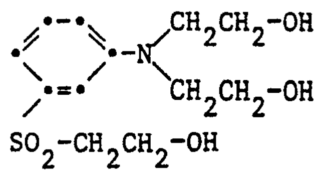

(7).

f) Verbindung gemäss d), der Formel

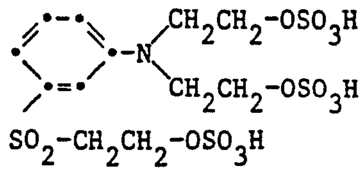

(8).

Das bevorzugte Verfahren zur Herstellung der Verbindung der Formel (7) ist dadurch gekennzeichnet, dass man eine Verbindung der Formel

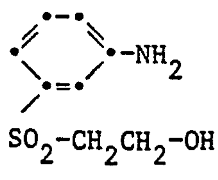

(10)

mit Aethylenoxid im molaren Verhältnis 1:2 umsetzt.

Vorteilhaft wird die Umsetzung in Eisessig und bei etwa 40° C ausgeführt.

Die so in guter Ausbeute erhaltene Verbindung der Formel (7) kann nunmehr mit einer diazotierten Diazokomponente gekuppelt werden. Die entstandene Azoverbindung kann anschliessend sulfatiert werden, wobei ein Farbstoff der Formel

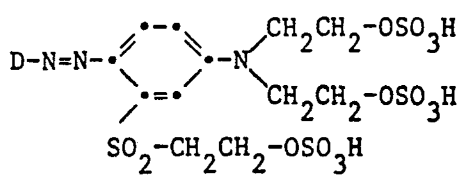

(2)

erhalten wird. Die Kupplungskomponente der Formel (7) kann aber auch, wie bereits weiter oben angegeben ist, vor der Kupplung sulfatiert werden, so dass die Verbindung der Formel (8) erhalten wird.

Die als Vorprodukte verwendeten Verbindungen der Formel (9) können im Benzolkern A, wie unter Formel (1) angegeben, weitersubstituiert sein.

Als Verbindungen der Formel (5), die als Diazokomponenten in Frage kommen, seien im folgenden beispielsweise genannt:

1-Amino-2,4,5-trichlorbenzol,
1-Amino-4-methylsulfonylbenzol,
1-Amino-4-äthylsulfonylbenzol,
1-Amino-2-chlor-4-methyl-sulfonylbenzol,
1-Amino-2-brom-4-methylsulfonylbenzol,
1-Amino-2-chlor-4-äthylsulfonylbenzol,
1-Amino-2-brom-4-äthylsulfonylbenzol,
1-Amino-2,6-dibrom-4-methylsulfonylbenzol,
1-Amino-2,6-dibrom-4-äthylsulfonylbenzol,
1-Amino-4-N,N-dimethylaminosulfonylbenzol,
1-Amino-4-N,N-diäthylaminosulfonylbenzol,
1-Amino-4-N,N-di-n-butylaminosulfonylbenzol,
1-Amino-2-brom-4-N,N-dimethylaminosulfonylbenzol,
1-Amino-2-brom-4-N,N-diäthylaminosulfonylbenzol,
1-Amino-2,5-dichlor-4-N,N-dimethylaminosulfonylbenzol,
1-Amino-2,5-dichlor-4-N,N-diäthylaminosulfonylbenzol,
1-Amino-2,5-dichlor-4-N,N-di-n-butylaminosulfonylbenzol,
1-Amino-2,5-dichlor-4-äthylaminosulfonylbenzol,
1-Amino-2,5-dichlor-4-β-äthyl-n-hexylaminosulfonylbenzol,
1-Amino-2,5-dichlor-4-cyclohexylaminosulfonylbenzol,

1-Amino-2,5-dichlor-4-phenylaminosulfonylbenzol,
1-Amino-2-chlor-4-phenylaminosulfonylbenzol,
1-Amino-2-chlor-5-N,N-diäthylaminosulfonylbenzol,
1-Amino-2-chlor-5-N,N-di-n-butylaminosulfonylbenzol,
1-Amino-2-chlor-5-β-äthyl-n-hexylaminosulfonylbenzol,
1-Amino-2-chlor-5-phenylaminosulfonylbenzol,
1-Amino-2-chlor-5-o-carboxyphenylaminosulfonylbenzol,
1-Amino-3-phenylaminosulfonylbenzol,
1-Amino-2-chlor-5-methylsulfonylbenzol,
1-Amino-2-chlor-5-äthylsulfonylbenzol,
1-Amino-2,6-dibrom-4-äthylaminosulfonylbenzol,
1-Amino-2,6-dibrom-4-n-butylaminosulfonylbenzol,
1-Amino-2,6-dibrom-4-N,N-dimethylaminosulfonylbenzol,
1-Amino-2,6-dibrom-4-N,N-diäthylaminosulfonylbenzol,
1-Amino-2-N,N-diäthylaminosulfonylbenzol,
1-Amino-2-N,N-di-n-butylaminosulfonylbenzol,
1-Amino-2-N-methyl-N-cyclohexylaminosulfonylbenzol,
1-Amino-2-o-chlorphenoxysulfonylbenzol,
1-amino-2,4-dibrom-6-N,N-diäthylaminosulfonylbenzol,
1-Amino-4-phenylsulfonylbenzol,
1-Amino-3-chlor-4-phenylsulfonylbenzol,
1-Amino-3-cyan-4-phenylsulfonylbenzol,
1-Amino-2,6-dibrom-4-phenylsulfonylbenzol,
1-Amino-2-phenylsulfonylbenzol,
1-Amino-2,4-dibrom-6-phenylsulfonylbenzol,
1-Amino-2-chlor-5-phenylsulfonylbenzol,
1-Amino-2,4-di-n-butylsulfonyl-5-chlorbenzol,
1-Amino-4-N,N-di-methylaminocarbonylbenzol,
1-Amino-4-N,N-di-äthylaminocarbonylbenzol,
1-Amino-4-N,N-di-n-butylaminocarbonylbenzol,
1-Amino-2-brom-4-N,N-diäthylaminocarbonylbenzol,
1-Amino-2,6-dibrom-4-N,N-diäthylaminocarbonylbenzo,
1-Amino-2-chlor-5-N,N-diäthylaminocarbonylbenzol,
1-Amino-2-chlor-5-N,N-di-n-butylaminocarbonylbenzo,
1-Amino-2-N,N-diäthylaminocarbonylbenzol,
1-Amino-2,4-dibrom-6-N,N-diäthylaminocarbonylbenzo,
4-Amino-N-cyclohexylphthalimid,
Amino-N-cyclohexylphthalimid-Isomerengemisch,
4-Aminobenzophenon,
4-Amino-4'-isopropylbenzophenon,
2-Aminobenzophenon,
2-Amino-3,5-dibrombenzophenon,
3-Amino-4-chlor-2'-carboxybenzophenon,
1-Amino-4-phenylaminocarbonylbenzol,
1-Amino-3-chlor-4-cyanbenzol,
1-Amino-2,5-dicyanbenzol,
1-Amino-2,4-dicyanbenzol,
1-Amino-3,4-dicyanbenzol,
1-Amino-3,4-dicyan-brombenzol,
1-Amino-3-cyanbenzol,
1-Amino-3-trifluormethylbenzol,
1-Amino-2-trifluormethylbenzol,
1-Amino-2-trifluormethyl-4-chlorbenzol,
1-Amino-2-chlor-5-trifluormethylbenzol,
1-Aminoanthrachinon,
1-Amino-2,5-dichlorbenzol,
1-Amino-2,4-dichlorbenzol,
1-Amino-3,4-dichlorbenzol,
1-Amino-2,3-dichlorbenzol,
1-Amino-3-phenylsulfonylaminosulfonylbenzol,
4-Amino-3,5-dibromazobenzol,
2-Aminobenzthiazol,
2-Amino-6-methylsulfonylbenzthiazol,
2-Amino-4-chlorbenzthiazol,
2-Amino-5,6-dichlorbenzthiazol,

2-Amino-6,7-dichlorbenzthiazol,
2-Amino-6-brombenzthiazol,
3-Amino-2,1-benzisothiazol,
3-Amino-5,7-dibrom-2,1-benzisothiazol,
3-Amino-5-nitro-2,1-benzisothiazol,
3-Amino-5-nitro-7-brom-2,1-benzisothiazol,
6-Amino-2-äthylsulfonylbenzthiazol,
2-Amino-5-phenyl-1,3,4-thiadiazol,
2-Amino-5-äthylthio-1,3,4-thiadiazol,
2-Amino-5-n-butylthio-1,3,4-thiadiazol,
2-Amino-5-benzylthio-1,3,4-thiadiazol,
5-Amino-3-phenyl-1,2,4-thiadiazol,
Dehydrothio-p-toluidin,
Amino-N-phenylphthalhydrazid,
2-Amino-4,6-dibrombenzthiazol,
1-Amino-2-chlor-4-N,N-diäthylaminosulfonylbenzol,
1-Amino-2-brom-4-N,N-di-n-butylaminosulfonylbenzol,
1-Amino-4-β-hydroxyäthylsulfonylbenzol,
1-Amino-2-brom-4-β-hydroxyäthylsulfonylbenzol,
1-Amino-3-β-hydroxyäthylsulfonylbenzol,
1-Amino-2,4-di-β-hydroxyäthylsulfonyl-5-chlorbenzol,
1-Amino-2,4-di-β-hydroxyäthylsulfonylbenzol,
1-Amino-3-β-sulfatoäthylsulfonylbenzol,
1-Amino-4-β-sulfatoäthylsulfonylbenzol,
1-Amino-2-brom-4-β-sulfatoäthylsulfonylbenzol,
1-Amino-2,4-di-β-sulfatoäthylsulfonyl-5-chlorbenzol.
1-Amino-2,4-di-β-sulfatoäthylsulfonylbenzol,
2-Amino-4-sulfo-4'-methyldiphenylsulfon,
Dehydrothio-p-toluidinsulfonsäure,
1-Amino-4-β-sulfatoäthylaminosulfonylbenzol,
1-Amino-2-brom-4-β-sulfatoäthylaminosulfonylbenzol,
1-Amino-4-(N,N-di-β-sulfatoäthyl)aminosulfonylbenzol,
1-Amino-2-brom-4-(N,N-di-β-sulfatoäthyl)-aminosulfonylbenzol,
1-Amino-2,5-dichlor-4-β-sulfatoäthylaminosulfonylbenzol,
1-Amino-2,5-dichlor-4-(N-methyl-N-β-sulfatoäthyl)aminosulfonylbenzol,
1-Amino-2,5-dichlor-4-(N,N-di-β-sulfatoäthyl)aminosulfonylbenzol,
1-Amino-2,5-dichlor-4-β-sulfoäthylaminosulfonylbenzol,
1-Amino-2-chlorbenzol-4-sulfonsäure,
1-Amino-2,5-dichlorbenzol-4-sulfonsäure,
1-Amino-2-chlorbenzol-5-sulfonsäure,
1-Amino-2,6-dibrombenzol-4-sulfonsäure,
1-Aminobenzol-3-sulfonsäure,
1-Aminobenzol-4-sulfonsäure,
1-Aminobenzol-2-sulfonsäure,
1-Aminobenzol-2,4-disulfonsäure,
1-Amino-4-β-sulfatoäthylsulfonylbenzol-2-sulfonsäure,
1-Amino-4-(6'-methyl-7'-sulfobenzthiazolyl-2)benzol-2-sulfonsäure,
4-Aminoazobenzol-3,4'-disulfonsäure,
2-Amino-4'-methyldiphenylsulfon-4-sulfonsäure,
1-Amino-2-(N,N-di-β-sulfatoäthyl)aminosulfonylbenzol,
1-Amino-2-(N-methyl-N-β-sulfatoäthyl)-aminosulfonylbenzol,
1-Amino-2,4-dibrom-6-(N,N-di-β-sulfatoäthyl)-aminosulfonylbenzol,
1-Amino-2-chlor-5-β-sulfatoäthylaminosulfonylbenzol,
1-Amino-2-chlor-5-(N,N-di-β-sulfatoäthyl)aminosulfonylbenzol,
1-Amino-4-β-sulfatoäthylaminocarbonylbenzol,
1-Amino-2-brom-4-β-sulfatoäthylaminocarbonylbenzol,
1-Amino-2,6-dibrom-4-β-sulfatoäthylaminocarbonylbenzol,
1-Amino-4-(N-methyl-N-β-sulfatoäthyl)-aminocarbonylbenzol,
1-Amino-2-brom-4-(N-methyl-N-β-sulfatoäthyl)-aminocarbonylbenzol,
1-Amino-4-(N-phenyl-N-β-sulfatoäthyl)aminocarbonylbenzol,
1-Amino-4-(N,N-di-β-sulfatoäthyl)-aminocarbonylbenzol,
1-Amino-2-brom-4-(N,N-di-β-sulfatoäthyl)aminocarbonylbenzol,
1-Amino-2,6-dibrom-4-(N,N-di-β-sulfatoäthyl)aminocarbonylenzol,
1-Amino-2-chlor-5-β-sulfatoäthylaminocarbonylbenzol,
1-Amino-2-chlor-5-(N,N-di-β-sulfatoäthylamino)carbonylbenzol,

1-Amino-2-(N-methyl-N-β-sulfatoäthylamino)carbonylbenzol,
1-Amino-2-(N,N-di-β-sulfatoäthylamino)carbonylbenzol,
1-Amino-2,4-dibrom-6-(N,N-di-β-sulfatoäthylamino)carbonylbenzol,
2-Aminobenzthiazol-6-sulfonsäure,
2-Amino-6-methylbenzthiazol-7-sulfonsäure,
2-Amino-5-β-sulfatoäthylthio-1,3,4-thiadiazol,
2-Amino-5-γ-sulfopropylthio-1,3,4-thiadiazol,
2-Amino-5-sulfophenyl-1,3,4-thiadiazol,
5-Amino-3-sulfophenyl-1,2,4-thiadiazol,
3-Amino-2,1-benzisothiazol-5,7-disulfonsäure,
1-Amino-2,5-dichlor-4-(N-methyl-N-β-sulfoäthylamino)sulfonylbenzol,
1-Amino-2,5-dichlor-4-(N-äthyl-N-β-sulfatoäthylamino)sulfonylbenzol,
1-Amino-2-chlor-4-β-sulfoäthylaminosulfonylbenzol,
1-Amino-3-chlor-4-sulfamoylbenzol-6-sulfonsäure,
1-Amino-2-chlor-4-(4'-sulfophenylamino)-sulfonylbenzol,
1-Amino-2,5-dichlor-4-(4'-sulfophenylamino)sulfonylbenzol,
1-Amino-2,5-dichlor-4-(3'-sulfophenylamino)sulfonylbenzol,
1-Amino-2,5-dichlor-4-(2'-sulfophenylamino)-sulfonylbenzol,
1-Amino-4-α,β-dibrompropionylaminobenzol-2-sulfonsäure,
1-Amino-3-α,β-dibrompropionylaminobenzol-6-sulfonsäure,
4-Amino-N-β-sulfatoäthylphthalimid,
3-Amino-N-β-sulfatoäthylphthalimid,
4-Amino-N-(3'-sulfo-4'-methylphenyl)phthalimid,
3-Amino-N-(3'-sulfo-4'-methylphenyl)phthalimid,
4-Amino-N-sulfobenzylphthalimid,
3-Amino-N-sulfobenzylphthalimid.

Als Kupplungskomponenten der Formel (6) seien beispielsweise genannt:
1-N,N-Dimethylamino-3-β-hydroxyäthylsulfonylbenzol,
1-N,N-Diäthylamino-3-β-hydroxyäthylsulfonylbenzol,
1-N,N-Di-β-hydroxyäthylamino-3-β-hydroxyäthylsulfonylbenzol,
1-N,N-Di-β-sulfatoäthylamino-3-β-sulfatoäthylsulfonylbenzol,
1-N,N-Di-β-hydroxy-n-propylamino-3-β-hydroxyäthylsulfonylbenzol,
1-N,N-Di-β-hydroxy-n-butylamino-3-β-hydroxyäthylsulfonylbenzol,
1-N,N-Di-β-sulfato-n-propylamino-3-β-sulfatoäthylsulfonylbenzol,
1-N,N-Di-β-sulfato-n-butylamino-3-β-sulfatoäthylsulfonylbenzol,
1-N,N-Di-γ-sulfopropylamino-3-β-sulfatoäthylsulfonylbenzol,
1-N,N-Di-β-sulfoäthylamino-3-β-sulfatoäthylsulfonylbenzol,
1-N,N-Di-2-propenylamino-3-β-sulfatoäthylsulfonylbenzol,
1-N,N-Di-β-chlor-2-propenylamino-3-β-sulfatoäthylsulfonylbenzol,
1-N,N-Di-β-brom-2-propenylamino-3-β-sulfatoäthylsulfonylbenzol,
1-N,N-Di-γ-chlor-2-propenylamino-3-β-sulfatoäthylsulfonylbenzol,
1-N,N-Di-γ-chlor-2-butenylamino-3-β-sulfatoäthylsulfonylbenzol,
1-N,N-Diäthylamino-3-β-sulfatoäthylsulfonylbenzol,
1-N,N-Di-n-propylamino-3-β-sulfatoäthylsulfonylbenzol,
1-N,N-Di-n-butylamino-3-β-sulfatoäthylsulfonylbenzol,
1-N,N-Di-β-sulfato-γ-chlor-propylamino-3-β-sulfatoäthylsulfonylbenzol

Eine bevorzugte Ausführungsform des Verfahrens zur Herstellung von Reaktivfarbstoffen der Formel (1) besteht darin, dass man eine Diazokomponente der Formel (5) diazotiert und auf eine Kupplungskomponente der Formel

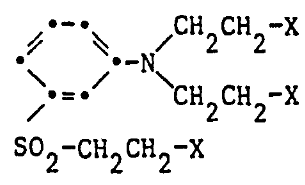

(11),

worin X Hydroxy oder Sulfato ist, kuppelt, und den erhaltenen Azofarbstoff gegebenenfalls sulfatiert.

Eine vorteilhafte Methode besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion.

Beispielsweise kann man einen Farbstoff der Formel (1) herstellen, worin Y ein Rest $-CH_2CH_2-OH$ ist, und das Zwischenprodukt mit Schwefelsäure umsetzen, so dass die Hydroxygruppe in die Sulfatogruppe überführt

wird; oder man kann einen Farbstoff der Formel (1) herstellen, worin Y ein Rest $-CH=CH_2$ ist, und an das Zwischenprodukt Thioschwefelsäure anlagern, wobei ein Rest $-CH_2CH_2-SSO_3H$ entsteht.

Der oben beschriebene Weg der Herstellung über eine Zwischenstufe des Reaktivrestes geht in vielen Fällen einheitlich und vollständig.

Die bevorzugten Reaktivfarbstoffe der Formel (2) können glatt und mit guter Ausbeute hergestellt werden, indem man eine Diazokomponente der Formel (5) diazotiert und auf eine Kupplungskomponente der Formel

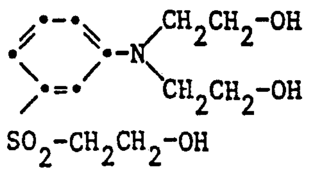

(7)

kuppelt, und die erhaltene Monoazoverbindung durch Umsetzung mit Chlorsulfonsäure in N-Methylpyrrolidon in den Tri-Sulfatoester überführt.

Der direkte Weg, die Kupplung der bereits sulfatierten Diazokomponente mit der ebenfalls sulfatierten Kupplungskomponente, ist auch gangbar.

Die Reaktivfarbstoffe der Formel (1) eignen sich zum Färben und Bedrucken von verschiedenartigsten Materialien, wie Seide, Leder, Wolle, Polyamidfasern und Polyurethanen, insbesondere aber cellulosehaltiger Materialien faseriger Struktur, wie Leinen, Zellstoff, regenerierter Cellulose und vor allem Baumwolle. Sie eignen sich sowohl für das Ausziehverfahren als auch zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung, fixiert werden.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Padsteam-Verfahren nur kurze Dämpfzeiten. Sie ergeben Färbungen mit guten Nass- und Lichtechtheiten und hoher Farbstärke und bemerkenswert hoher Faser-Farbstoff-Bindungsstabilität, sowohl in saurem als auch in alkalischem Bereich. Sie zeichnen sich ferner durch gute Auswaschbarkeit der nicht fixierten Anteile aus.

Die Reaktivfarbstoffe der Formel (1) eignen sich besonders zum Färben von Baumwolle nach den Ausziehfärbeverfahren, wobei die Differenz zwischen Ausziehgrad und Fixiergrad bemerkenswert klein, d.h. der Seifverlust sehr gering ist. Besonders geeignet sind sie auch für das sogenannte Kaltverweilverfahren, wonach der Farbstoff zusammen mit dem Alkali auf dem Foulard aufgebracht wird und danach durch mehrstündiges Lagern bei Raumtemperatur fixiert wird.

Die Reaktivfarbstoffe der Formel (1) eignen sich auch zum Druck, insbesondere auf Baumwolle, ebenso aber auch zum Bedrucken von stickstoffhaltigen Fasern, z.B. von Wolle, Seide oder Wolle enthaltenden Mischgeweben.

Aus der US-A-3.139.422 sind wasserunlösliche Azofarbstoffe bekannt, welche einen Aminobenzolrest enthalten, der in ortho-Stellung zur Azobrücke eine Halogenäthylaminosulfonyl-Gruppe enthält. In der FR-A-1.546.447 sind Azofarbstoffe beschrieben, welche einen Aminobenzolrest enthalten, der in ortho-Stellung zur Azobrücke einen über eine Aminogruppe gebundenen heterocyclischen Reaktivrest enthält.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels, zu unterwerden.

Die Herstellung der Zwischenverbindungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile, und die Temperaturen sind in Celsiusgraden angegeben.

**Beispiel 1**

In eine Suspension von 40,2 g 3-Aminophenyl-oxaethyl-sulfon in 80 ml Essigsäure lässt man bei einer Temperatur von 40° Aethylenoxyd ein bis zur vollständigen Alkylierung der Aminogruppe, wobei sich der Endpunkt mittels Dünnschichtchromatographie ermitteln lässt. Es bildet sich eine Lösung welche die Verbindung der Formel

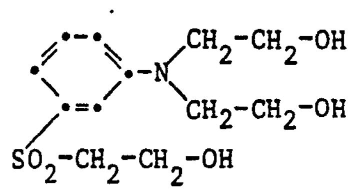

enthält. Durch Zugabe von Wasser stellt man den Gehalt an Essigsäure auf 80% ein. Diese Lösung kann direkt für Kupplungen eingesetzt werden.

Durch Eindampfen der ursprünglichen Lösung in Essigsäure im Vakuum bei tiefer Temperatur kann die oben angegebene Verbindung als solche isoliert werden.

**Beispiel 2**

Zu einer Lösung von 28,9 g der Verbindung der Formel

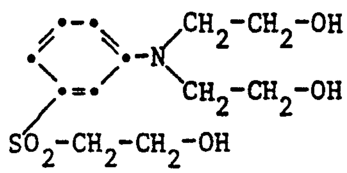

in 150 ml N-Methyl-pyrrolidon lässt man bei einer Temperatur von 20-40° 30 ml Chlorsulfonsäure zutropfen, worauf man das Gemisch während 4 Stunden bei 40-42° rührt. Man giesst hierauf die Mischung auf 600 ml Eis-Wasser und stellt den pH-Wert durch Zugabe von Natrium-bicarbonat auf 5,5. Man extrahiert das N-Methyl-pyrrolidon mit Methylenchlorid und dampft hierauf die Lösung im Vakuum bei 40° Badtemperatur zur Trockne ein. Das so erhaltene Produkt enthält neben Kochsalz die Verbindung der Formel

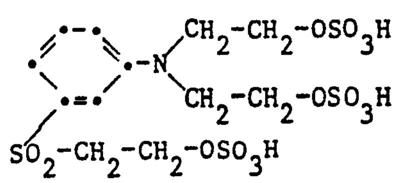

als Natriumsalz, welche als Kupplungskomponente verwendet werden kann.

**Beispiel 3**

Zu einem Gemisch, bestehend aus 3,90 g 2,4,5-Trichlor-anilin und 20 ml einer Mischung aus 5 Teilen Essigsäure und 1 Teil Propionsäure gibt man bei einer Temperatur von 0-5° 2/100 Mol Nitrosylschwefelsäure.

Man rührt die Mischung während 2 Stunden bei 0-5° und gibt hierauf 0,4 g Harnstoff zu. Nach Verschwinden des Nitrit-Ueberschusses lässt man die so erhaltene Lösung bei 0-5° zu 22 ml einer Lösung von 0,021 Mol der Kupplungskomponente der Formel

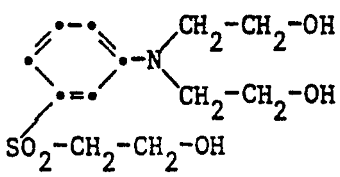

in 80%iger Essigsäure zutropfen. Durch Zugabe von 30%iger Ammoniumacetat-Lösung stellt man den pH-Wert auf 1 und nach 1 Stunde auf pH 2-3. Nach vollständigem Umsatz der Diazokomponente gibt man konzentrierte Natronlauge zu bis zu pH 7 und isoliert das ausgefällte Kupplungsprodukt durch Filtration. Nach Trocknung im Vakuum bei 70° erhält man das Produkt der Formel

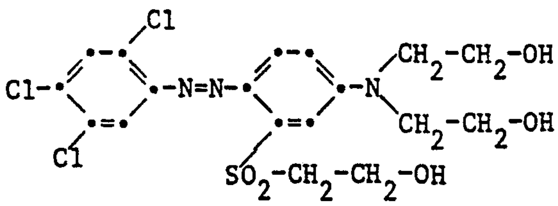

in Form eines roten Pulvers.

**Beispiel 4**

Zu einer Lösung von 9 g der Verbindung der Formel

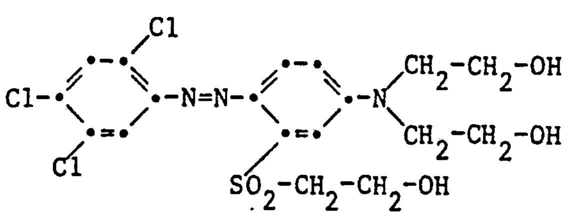

in 35 ml N-Methyl-pyrrolidon lässt man bei einer Temperatur von 20-40° 7,2 ml Chlorsulfonsäure zutropfen, worauf man das erhaltene Gemisch noch während 4 Stunden bei einer Temperatur von 40-42° rührt. Man giesst hierauf die Mischung auf Eis-Wasser, stellt den pH-Wert durch Zugabe von Natrium-bicarbonat auf 5,5 und extrahiert das Methyl-pyrrolidon mit Methylenchlorid, worauf man die Farbstoff-Lösung im Vakuum bei 40° Badtemperatur zur Trockne eindampft. Man erhält ein Farbstoff-Präparat in Form eines roten Pulvers, welches neben Kochsalz das Natriumsalz des Farbstoffs der Formel

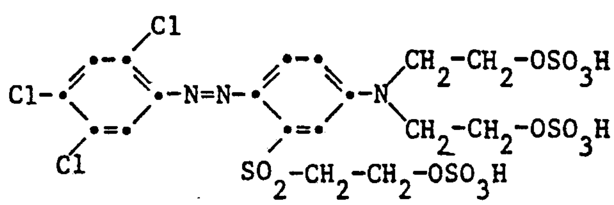

enthält und welches sich in Wasser mit roter Farbe löst.

Auf Baumwollgewebe nach den für Vinylsulfon-Farbstoffen üblichen Applikationsverfahren gefärbt, erhält man orange Färbungen mit guten Nassechtheiten und guter Lichtechtheit.

Verwendet man bei der Kupplung anstelle der oben angegebenen Kupplungskomponente eine äquivalente Menge der Kupplungskomponente der Formel

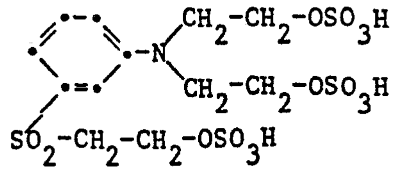

in Form des Natriumsalzes, so erhält man einen mit dem oben angegebenen Farbstoff identischen Farbstoff.

Verwendet man anstelle von 2,4,5-Trichloranilin äquivalente Mengen eines anderen Amins als Diazokomponente, so erhält man bei analogem Vorgehen die Farbstoffe der folgenden Tabelle I, welche ähnlich gute Echtheitseigenschaften aufweisen.

**Tabelle I**

| Nr. | K = 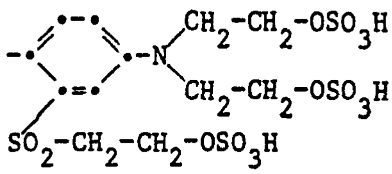 | Nuance auf Baumwolle |
|---|---|---|
| 1 | 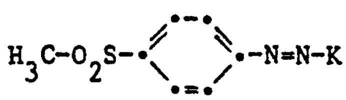 | gelb |
| 2 | 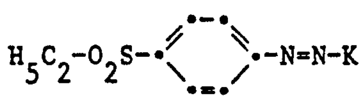 | gelb |
| 3 | 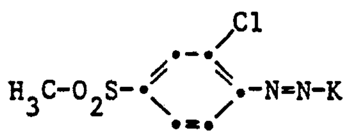 | orange |
| 4 | 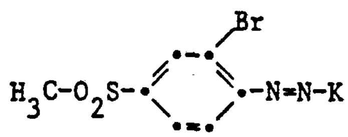 | orange |
| 5 | 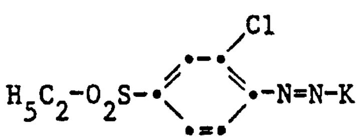 | orange |
| 6 | 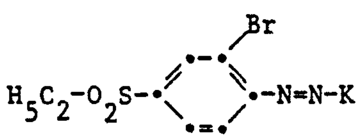 | orange |
| 7 | 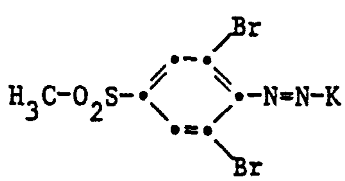 | orange |

**Tabelle I** (Fortsetzung)

| Nr. | K = 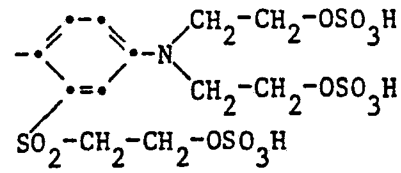 | Nuance auf Baumwolle |
|---|---|---|
| 8 | 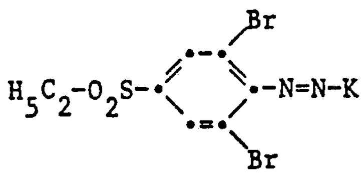 | orange |
| 9 | 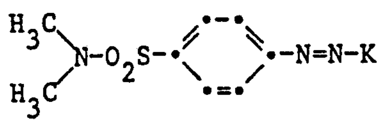 | gelb |
| 10 | 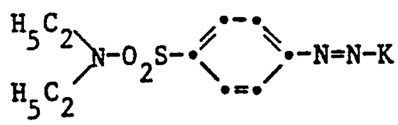 | gelb |
| 11 | 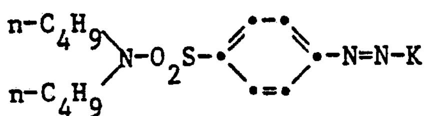 | gelb |
| 12 | 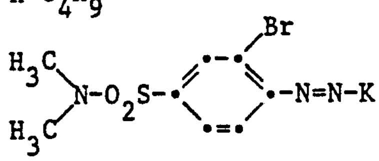 | orange |
| 13 | 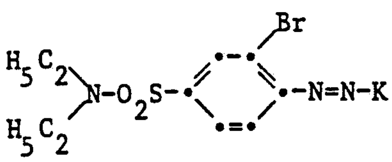 | orange |
| 14 | 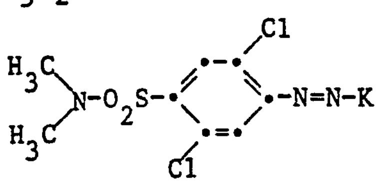 | scharlach |
| 15 | 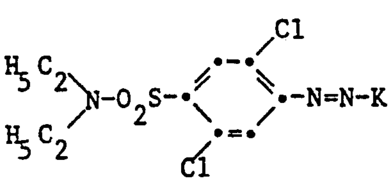 | scharlach |

**Tabelle I** (Fortsetzung)

| Nr. | K = 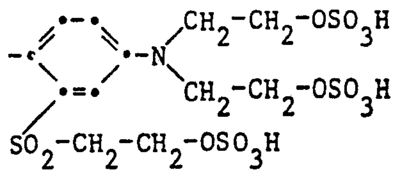 | Nuance auf Baumwolle |
|---|---|---|
| 16 | 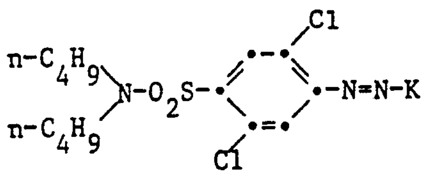 | scharlach |
| 17 | 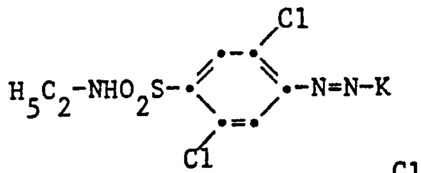 | scharlach |
| 18 | 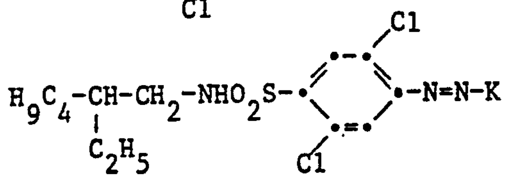 | scharlach |
| 19 | 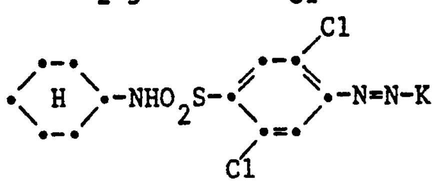 | scharlach |
| 20 | 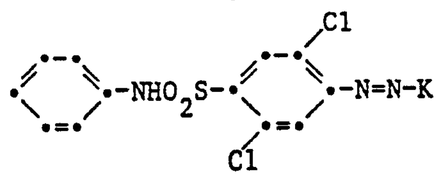 | scharlach |
| 21 | 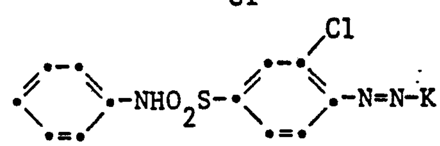 | orange |
| 22 | 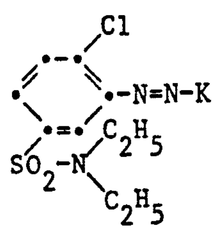 | gelb |
| 23 | 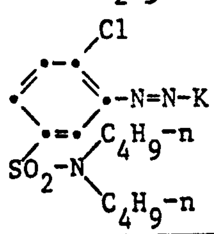 | gelb |

**Tabelle I** (Fortsetzung)

| Nr. | K = 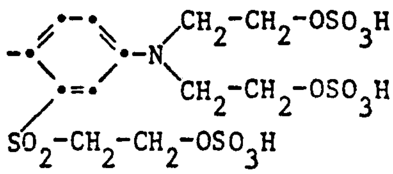 | Nuance auf Baumwolle |
|---|---|---|
| 24 | 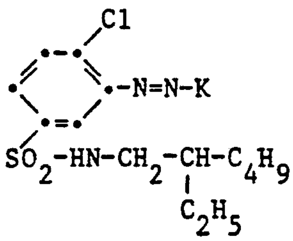 | gelb |
| 25 | 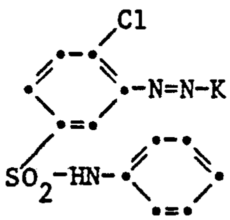 | gelb |
| 26 | 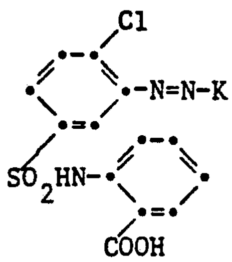 | gelb |
| 27 | 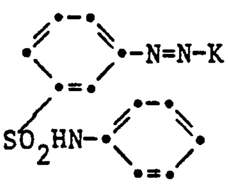 | gelb |
| 28 | 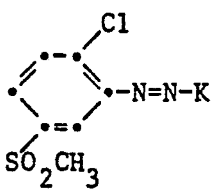 | gelb |
| 29 | 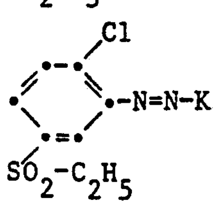 | gelb |

**Tabelle I** (Fortsetzung)

| Nr. | K = 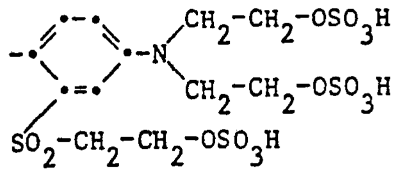 | Nuance auf Baumwolle |
|---|---|---|
| 30 | 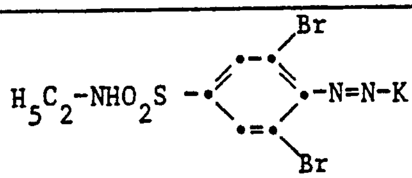 | orange |
| 31 | 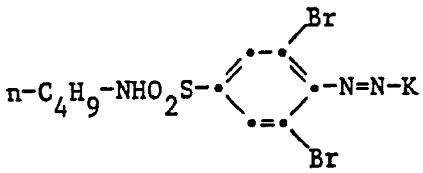 | orange |
| 32 | 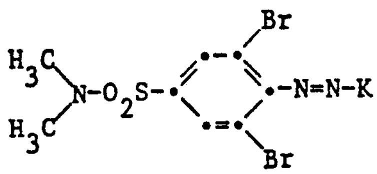 | orange |
| 33 | 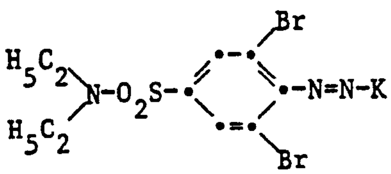 | orange |
| 34 | 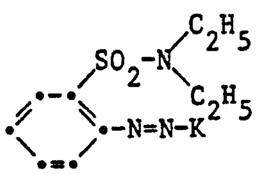 | gelb |
| 35 | 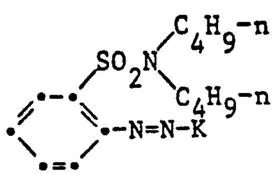 | gelb |
| 36 | 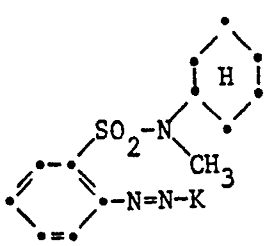 | gelb |

**Tabelle I** (Fortsetzung)

| Nr. | K = 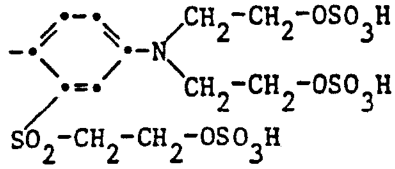 | Nuance auf Baumwolle |
|---|---|---|
| 37 | 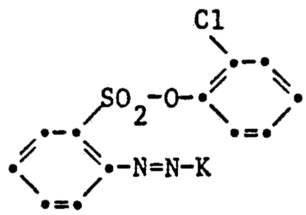 | gelb |
| 38 | 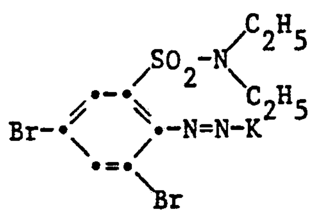 | orange |
| 39 | 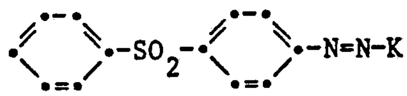 | gelb |
| 40 | 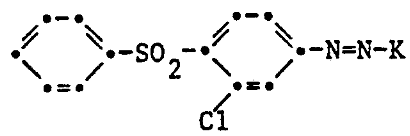 | orange |
| 41 | 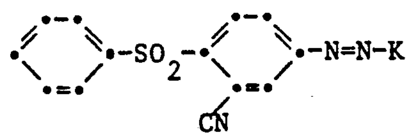 | orange |
| 42 | 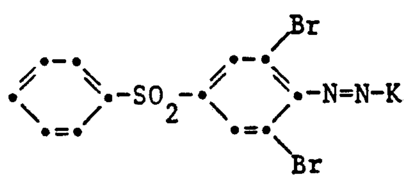 | orange |
| 43 | 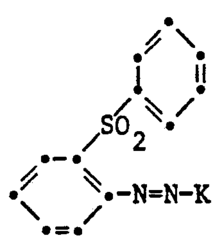 | gelb |

**Tabelle I** (Fortsetzung)

| Nr. | K = 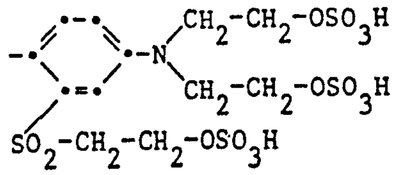 | Nuance auf Baumwolle |
|---|---|---|
| 44 | 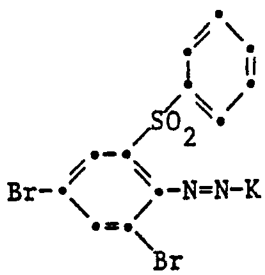 | orange |
| 45 | 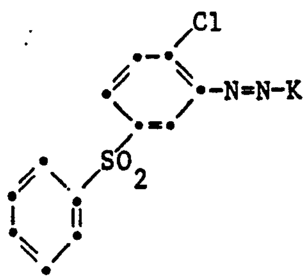 | gelb |
| 46 | 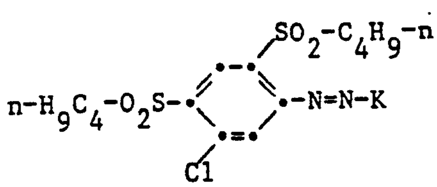 | rot |
| 47 | 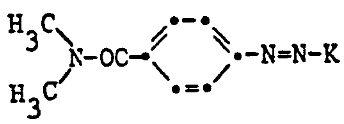 | gelb |
| 48 | 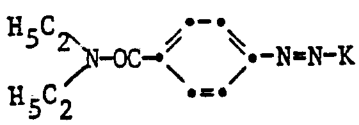 | gelb |
| 49 | 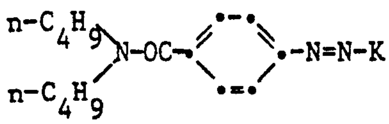 | gelb |

**Tabelle I** (Fortsetzung)

| Nr. | K = 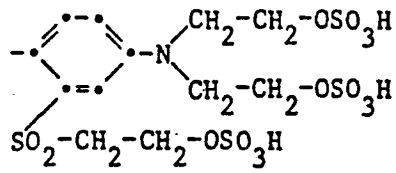 | Nuance auf Baumwolle |
|---|---|---|
| 50 | 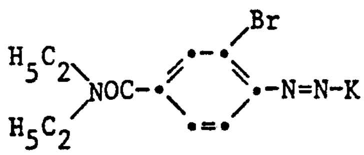 | orange |
| 51 | 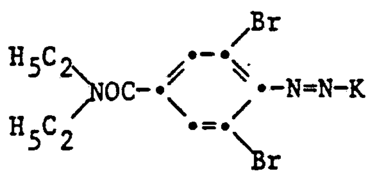 | orange |
| 52 | 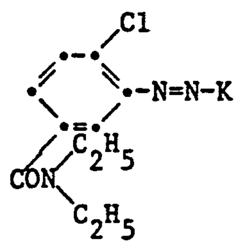 | gelb |
| 53 | 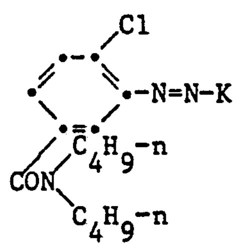 | gelb |
| 54 | 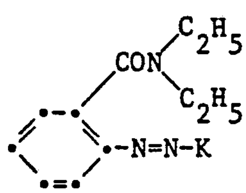 | gelb |
| 55 | 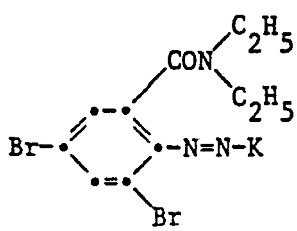 | orange |

**Tabelle I** (Fortsetzung)

| Nr. | K = 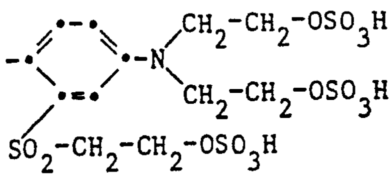 | Nuance auf Baumwolle |
|---|---|---|
| 56 | 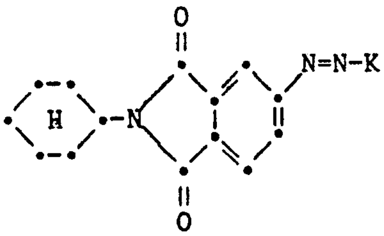 | scharlach |
| 57 | 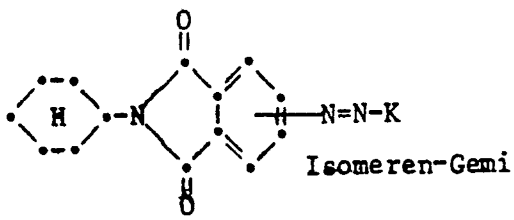 Isomeren-Gemisch | scharlach |
| 58 | 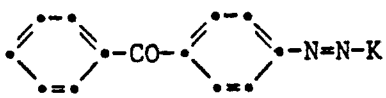 | gelb |
| 59 | 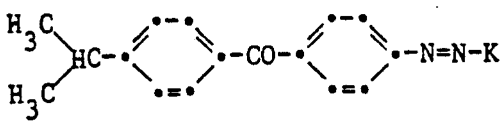 | gelb |
| 60 | 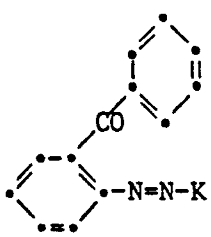 | gelb |
| 61 | 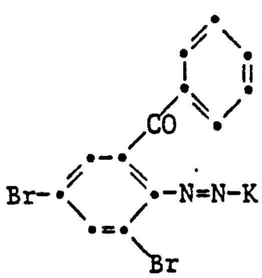 | orange |

**Tabelle I** (Fortsetzung)

| Nr. | K = 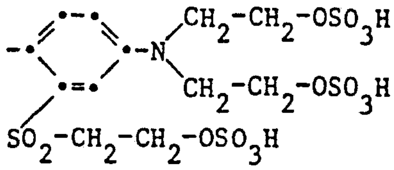 | Nuance auf Baumwolle |
|---|---|---|
| 62 | 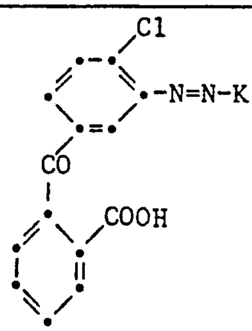 | gelb |
| 63 | 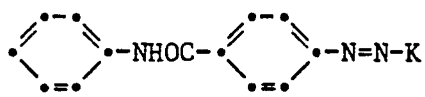 | gelb |
| 64 | 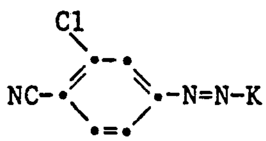 | orange |
| 65 | 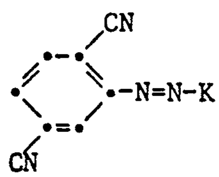 | gelb |
| 66 | 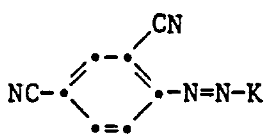 | scharlach |
| 67 | 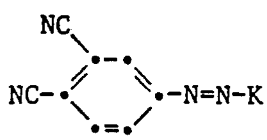 | scharlach |
| 68 | 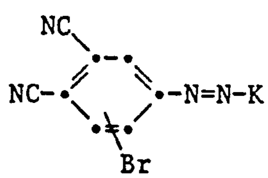 | rot |
| 69 | 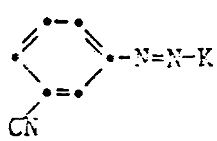 | gelb |

**Tabelle I** (Fortsetzung)

| Nr. | K = 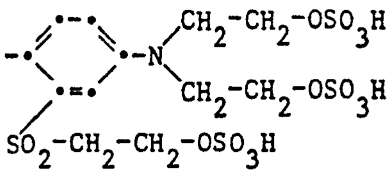 | Nuance auf Baumwolle |
|---|---|---|
| 70 | 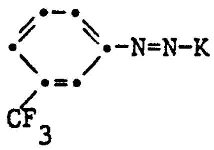 | gelb |
| 71 | 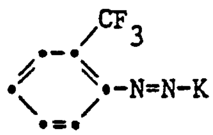 | gelb |
| 72 | 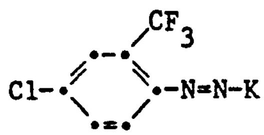 | gelb |
| 73 | 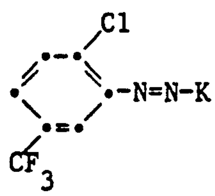 | gelb |
| 74 | 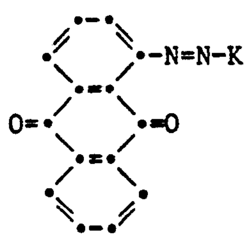 | gelb |
| 75 | 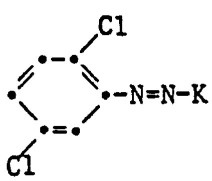 | gelb |
| 76 | 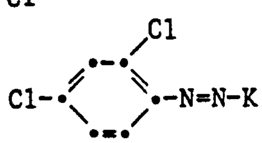 | gelb |
| 77 | 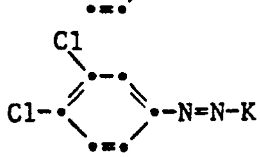 | gelb |

**Tabelle I** (Fortsetzung)

| Nr. | K = 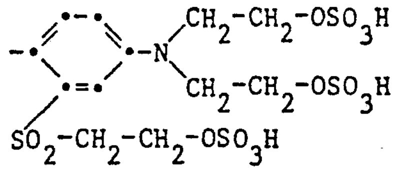 | Nuance auf Baumwolle |
|---|---|---|
| 78 | 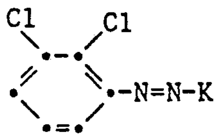 | gelb |
| 79 | 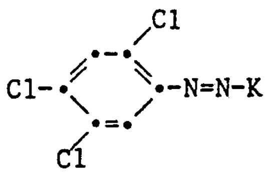 | orange |
| 80 | 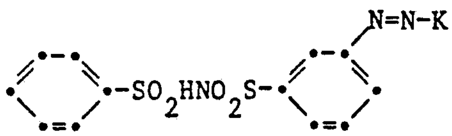 | gelb |
| 81 | 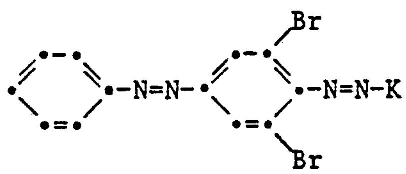 | orange |
| 82 | 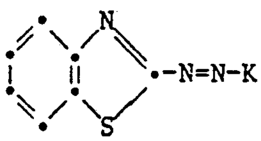 | rot |
| 83 | 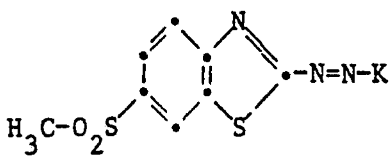 | rot |
| 84 | 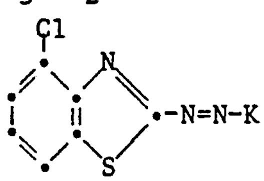 | rot |
| 85 | 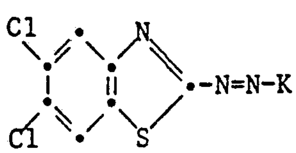 | rot |

**Tabelle I** (Fortsetzung)

| Nr. | K = 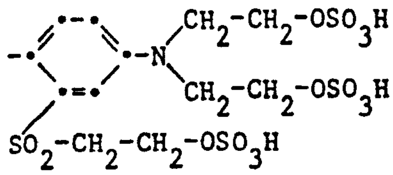 | Nuance auf Baumwolle |
|---|---|---|
| 86 | 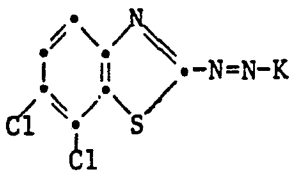 | rot |
| 87 | 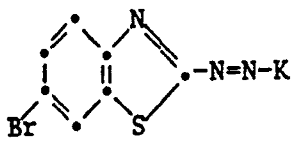 | rot |
| 88 | 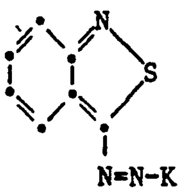 | rot |
| 89 | 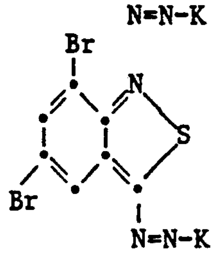 | rot |
| 90 | 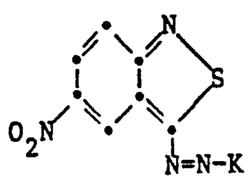 | rot |
| 91 | 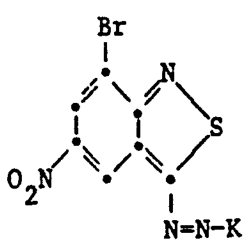 | rot |

**Tabelle I** (Fortsetzung)

| Nr. | K = 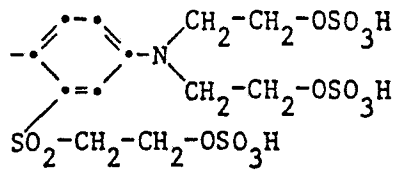 | Nuance auf Baumwolle |
|---|---|---|
| 92 | 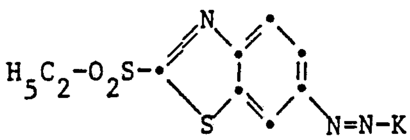 | orange |
| 93 | 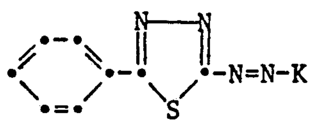 | rot |
| 94 | 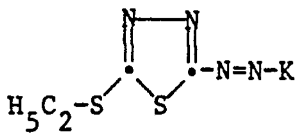 | rot |
| 95 | 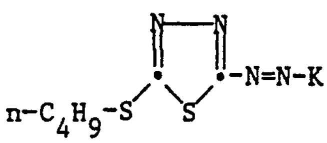 | rot |
| 96 | 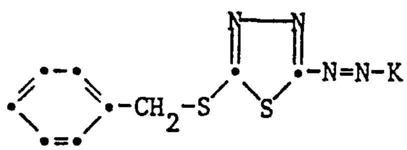 | rot |
| 97 | 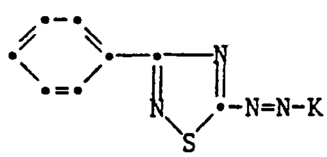 | rot |
| 98 | 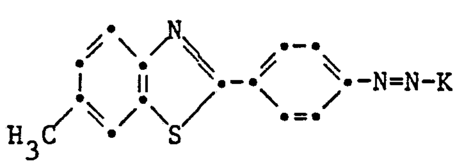 | gelb |
| 99 | 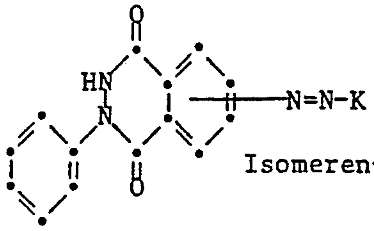 Isomeren-Gemisch | orange |

**Beispiel 5**

28,1 g 3-(β-Sulfatoäthylsulfonyl)-anilin werden unter Zugabe von Natriumbicarbonat in 100 ml Wasser bei Raumtemperatur neutral gelöst. Man versetzt diese Lösung mit 17,8 g einer wässrigen 40%igen Nitritlösung und lässt das Gemisch unter intensivem Rühren zu einer Mischung aus 80 g Eis und 27 g 31%iger Salzsäure zulaufen. Nach vollständiger Diazotierung gibt man die Diazosuspension zu einer Lösung von 0,1 Mol des Natriumsalzes der Kupplungskomponente der Formel

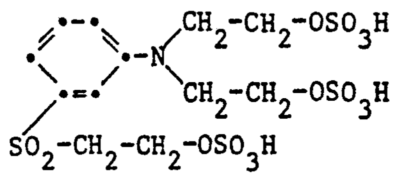

in 100 ml Wasser, welche vorher auf 0-5°gekühlt worden war. Zur Durchführung der Kupplung wird mit Natriumbicarbonat ein pH-Wert von 3-4 eingestellt. Nach vollständiger Kupplung stellt man den pH auf 5,5 und isoliert den gebildeten Farbstoff durch Eindampfen der Lösung im Vakuum bei 40-. Man erhält das Natriumsalz des Farbstoffs der Formel

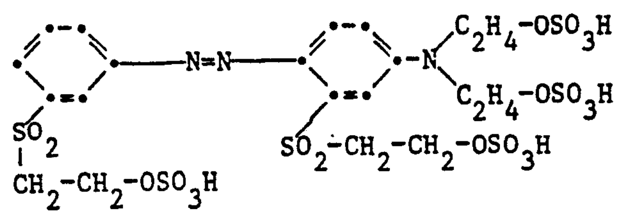

als gelbes Pulver, welches noch Natriumchlorid enthält.

Nach den für Vinylsulfonfarbstoffe üblichen Färbeverfahren auf Baumwollgeweben appliziert, erhält man rotstichiggelbe Färbungen mit guter Lichtechtheit und guten Nassechtheiten.

Verwendet man anstelle der oben eingesetzten Diazokomponente äquivalente Mengen anderer, Sulfogruppen aufweisender Amine, so erhält man bei analogem Vorgehen die in Tabelle II aufgeführten Farbstoffe, welche auf Baumwolle appliziert ähnlich gute Echtheitseigenschaften aufweisen.

**Tabelle II**

| Nr. | K = 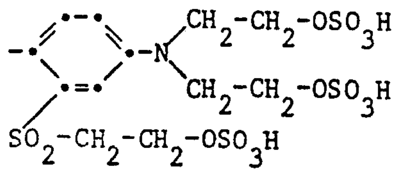 | Nuance auf Baumwolle |
|---|---|---|
| 1 | 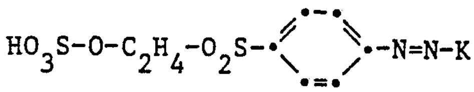 | gelb |
| 2 | 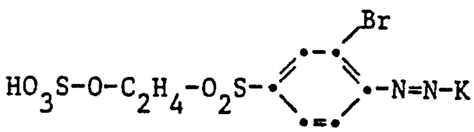 | orange |
| 3 | 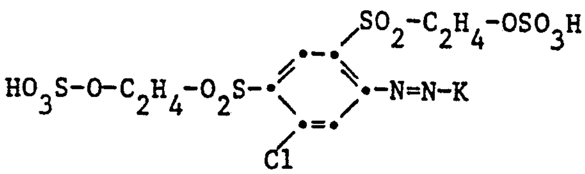 | rot |
| 4 | 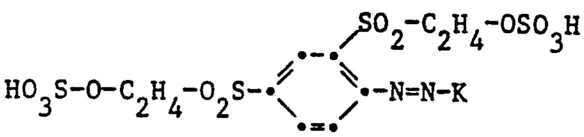 | rot |
| 5 | 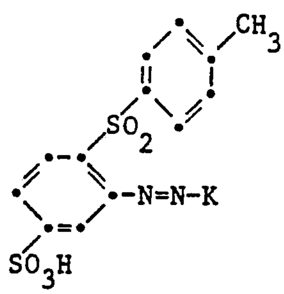 | orange |
| 6 | 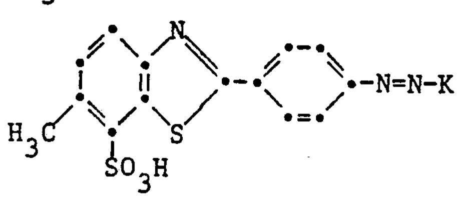 | gelb |

**Beispiel 6**

Zu einer Suspension von 40,2 g 3-Aminophenyl-oxaethyl-sulfon in 80 ml Essigsaure lässt man ber einer Temperatur von 40° 28 g Propylenoxyd zutropfen und rührt anschliessend das Gemisch bis zur vollständigen Alkylierung der Aminogruppe, was durch Dünnschicht-Chromatographie festgestellt werden kann. Man verdünnt anschliessend mit Wasser auf einen Essigsäure-Gehalt von 80% und erhält eine Lösung, welche die Kupplungskomponente der Formel

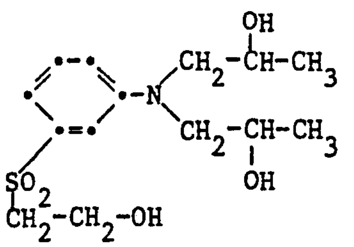

enthält. Diese Lösung kann direkt für Kupplungen verwendet werden.

Verwendet man anstelle von Propylenoxyd eine äquivalente Menge Butylenoxyd, so erhält man bei analogem Vorgehen die Kupplungskomponente der Formel

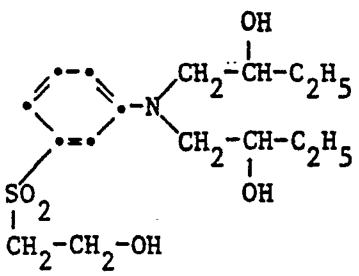

als Lösung in 80%iger Essigsäure.

Beide Verbindungen können nach der in Beispiel 2 angegebenen Weise in ihre Sulfatoester übergeführt werden.

Bei Verwendung dieser Kupplungskomponenten erhält man analog dem Vorgehen in Beispiel 5 die Farbstoffe der folgenden Tabelle III, welche nach den für Vinylsulfonfarbstoffe üblichen Färbeverfahren auf Baumwolle appliziert licht- und nassechte Färbungen ergeben.

**Tabelle III**

| Nr. | K = 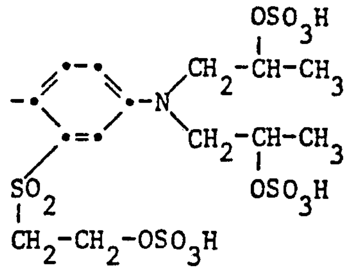 | Nuance auf Baumwolle |
|---|---|---|
| 1 | 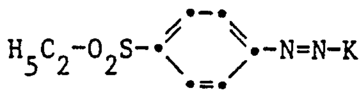 | gelb |
| 2 | 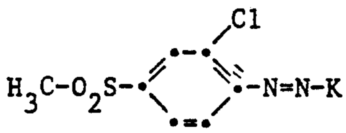 | orange |
| 3 | 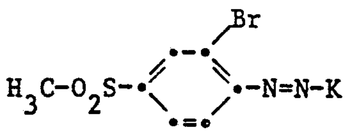 | orange |
| 4 | 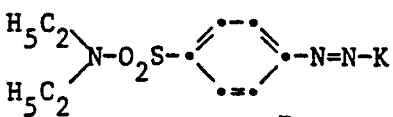 | gelb |
| 5 | 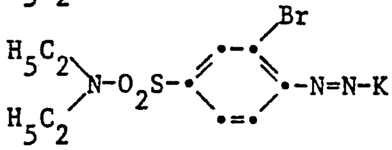 | orange |
| 6 | 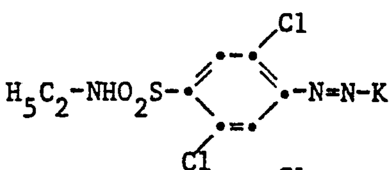 | scharlach |
| 7 | 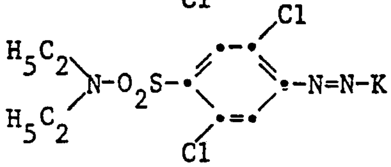 | scharlach |
| 8 | 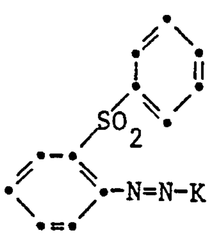 | gelb |

**Tabelle III** (Fortsetzung)

| Nr. | K = 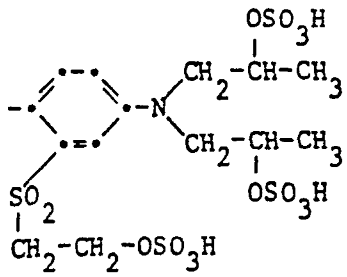 | Nuance auf Baumwolle |
|---|---|---|
| 9 | 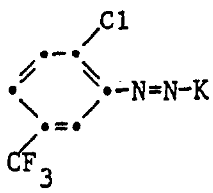 | gelb |
| 10 | 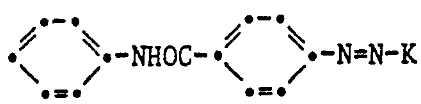 | gelb |
| 11 | 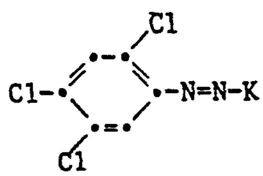 | orange |

| Nr. | K = 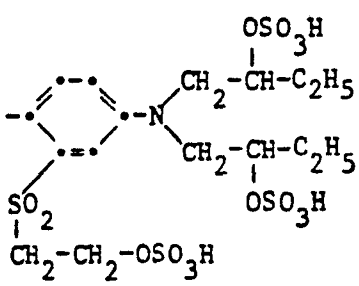 | Nuance auf Baumwolle |
|---|---|---|
| 12 | 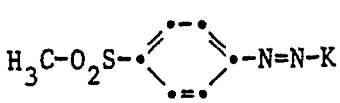 | gelb |
| 13 | 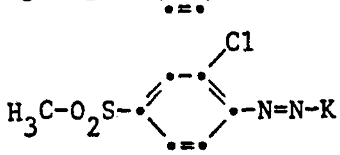 | orange |
| 14 | 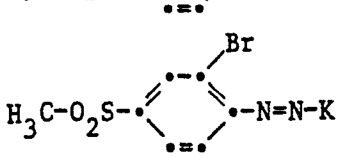 | orange |

**Tabelle III** (Fortsetzung)

| Nr. | | Nuance auf Baumwolle |
|---|---|---|
| | K = 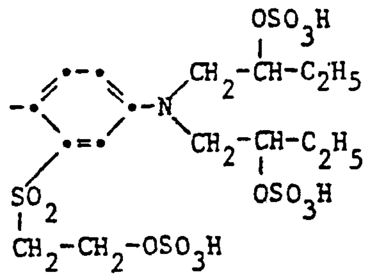 | |
| 15 | 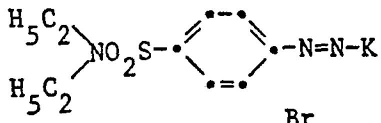 | gelb |
| 16 | 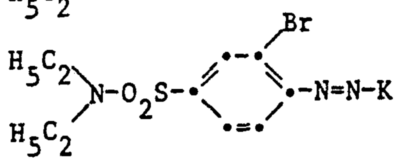 | orange |
| 17 | 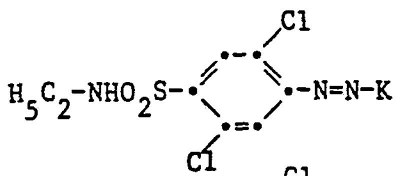 | scharlach |
| 18 | 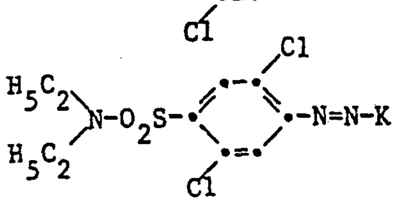 | scharlach |
| 19 | 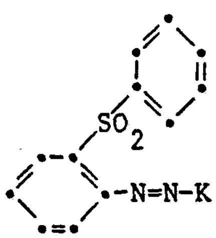 | gelb |
| 20 | 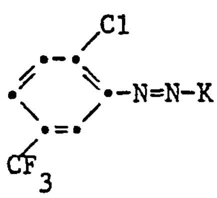 | gelb |
| 21 | 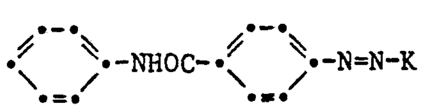 | gelb |
| 22 | 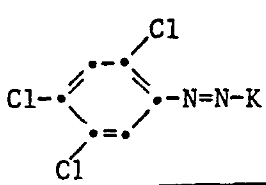 | orange |

**Beispiel 7**

Ein Gemisch, bestehend aus 20,1 g 3-Aminophenyl-oxaethyl-sulfon, 24,2 g 1,3-Dichlorpropen, 4,4 g Magnesiumoxyd, 0,5 g Kaliumjodid und 20 ml Aethylenglykol-mono-äthyläther wird bei einer Temperatur von 98-100° gerührt bis zur vollständigen Alkylierung der Aminogruppe, was sich durch Dünnschicht-Chromatographie feststellen lässt. Man verdünnt mit 60 ml Aethylenglykol-monoäthyläther und filtriert von ungelösten anorganischen Salzen ab. Die so erhaltene Lösung, welche die Verbindung der Formel

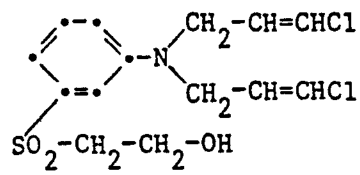

enthält, kann direkt für Azokupplungen verwendet werden. Die Verbindung lässt sich nach Isolierung in bekannter Weise in ihren Sulfoester überführen.

Verwendet man bei analogem Vorgehen anstelle von 1,3-Dichlor-propen äquivalente Mengen an Allylbromid, 1,2-Dichlorpropen, 1,2-Dibrompropen, 1,3-Dichlor-2-buten oder n-Butylbromid, so erhält man die Kupplungskomponenten der Formeln

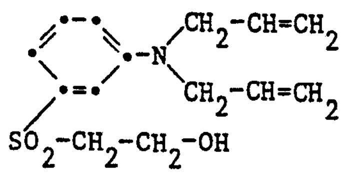

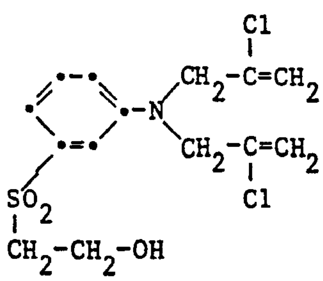

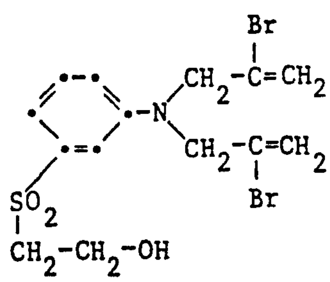

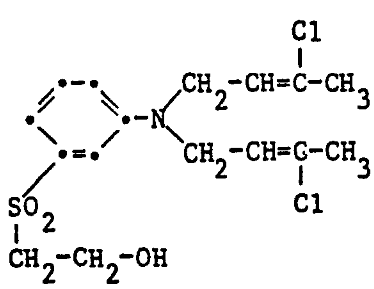

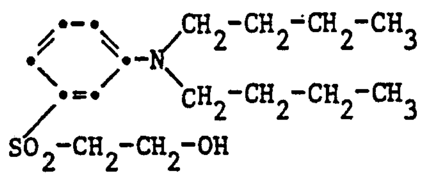

Diese Verbindungen lassen sich in bekannter Weise in ihre Sulfoester überführen.

Durch Azokupplung analog Beispiel 5 erhält man die in folgender Tabelle IV aufgeführten Farbstoffe, welche nach den für Vinylsulfonfarbstoffe üblichen Färbeverfahren appliziert, auf Baumwolle licht- und nassechte Färbungen ergeben.

**Tabelle IV**

| Nr. | K = 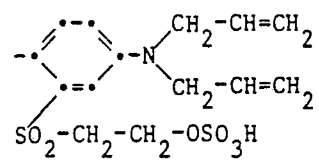 | Nuance auf Baumwolle |
|---|---|---|
| 1 | 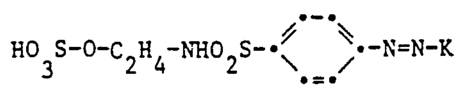 | gelb |
| 2 | 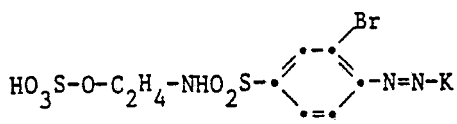 | orange |
| 3 | 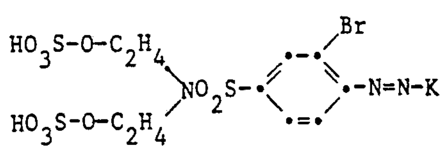 | orange |
| 4 | 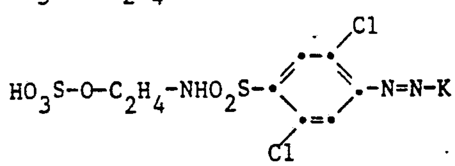 | scharlach |
| 5 | 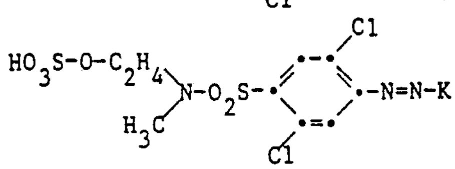 | scharlach |
| 6 | 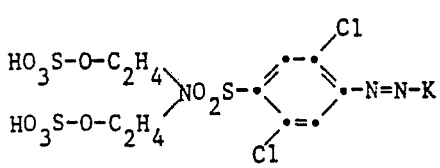 | scharlach |
| 7 | 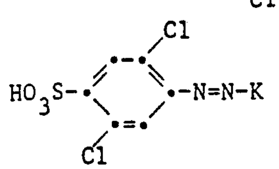 | orange |
| 8 | 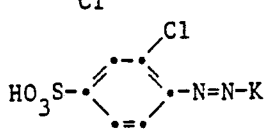 | gelb |

**Tabelle IV** (Fortsetzung)

| Nr. | K = 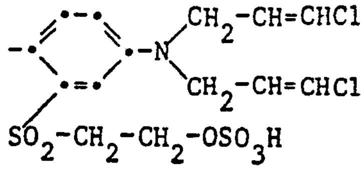 | Nuance auf Baumwolle |
|---|---|---|
| 9 | 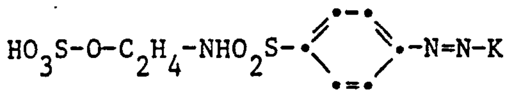 | gelb |
| 10 | 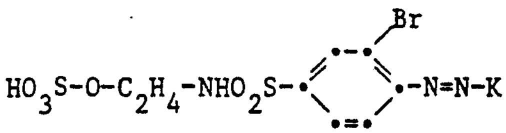 | orange |
| 11 | 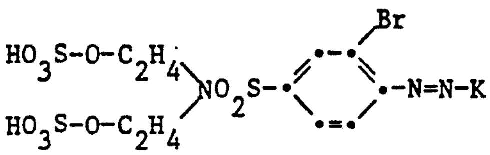 | orange |
| 12 | 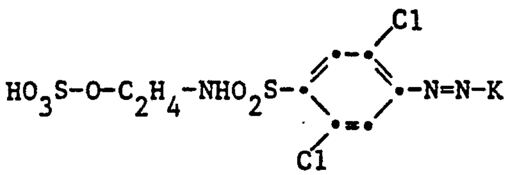 | scharlach |
| 13 | 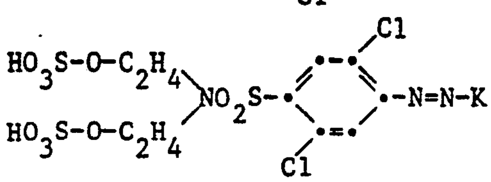 | scharlach |
| 14 | 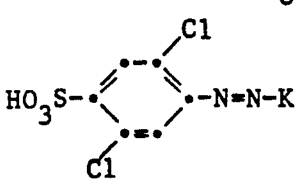 | orange |
| 15 | 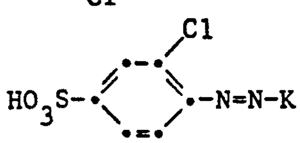 | gelb |
| 16 | 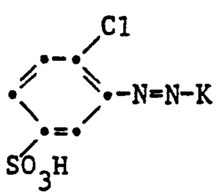 | gelb |
| 17 | 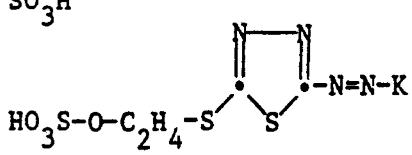 | rot |

**Tabelle IV** (Fortsetzung)

| Nr. | K = 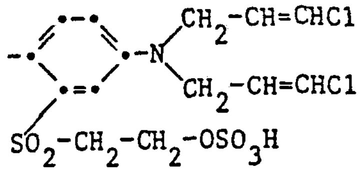 | Nuance auf Baumwolle |
|---|---|---|
| 18 | 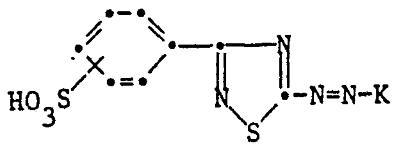 | rot |

| Nr. | K = 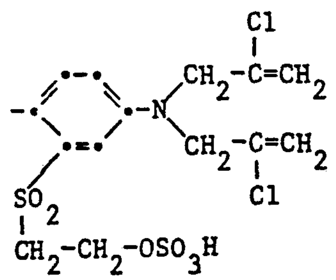 | Nuance auf Baumwolle |
|---|---|---|
| 19 | 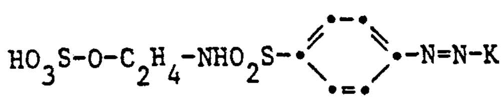 | gelb |
| 20 | 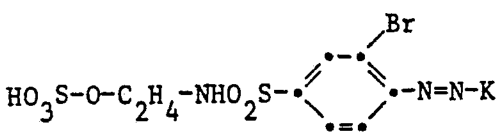 | orange |
| 21 | 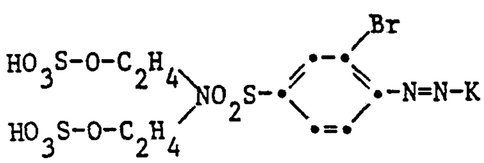 | orange |
| 22 | 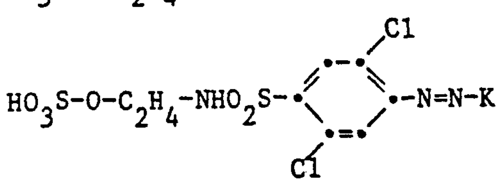 | scharlach |
| 23 | 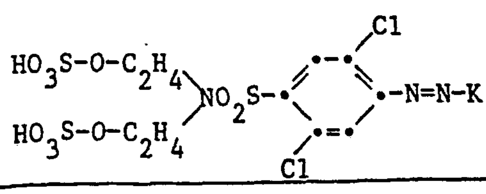 | scharlach |

**Tabelle IV** (Fortsetzung)

| Nr. | K = 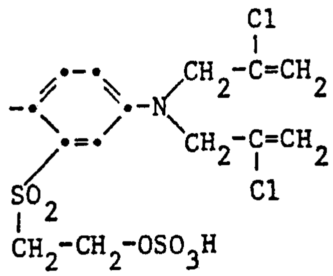 | Nuance auf Baumwolle |
|---|---|---|
| 24 | 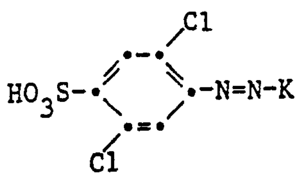 | orange |
| 25 | 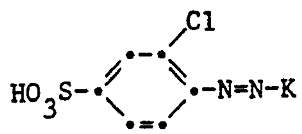 | gelb |
| 26 | 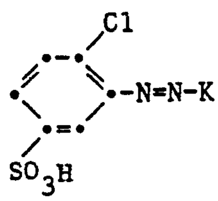 | gelb |
| 27 | 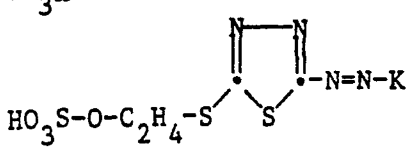 | rot |
| 28 | 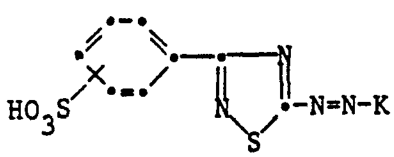 | rot |

| Nr. | K = 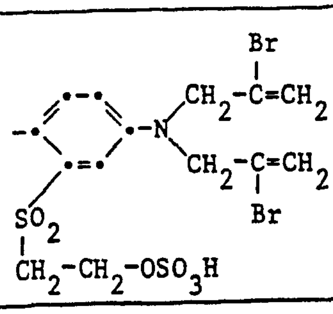 | Nuance auf Baumwolle |
|---|---|---|
| 29 | 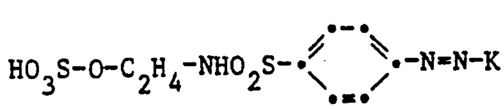 | gelb |

**Tabelle IV** (Fortsetzung)

| Nr. | K = 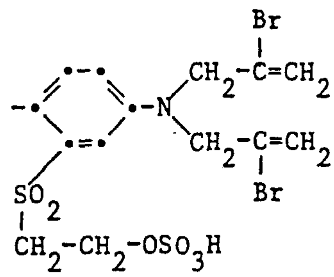 | Nuance auf Baumwolle |
|---|---|---|
| 30 | 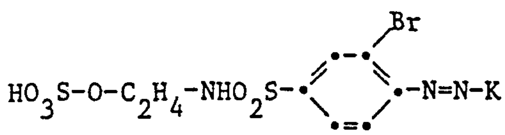 | orange |
| 31 | 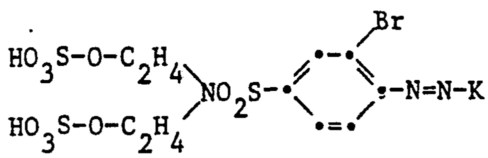 | orange |
| 32 | 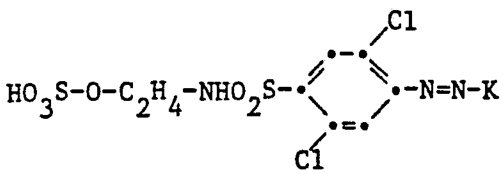 | scharlach |
| 33 | 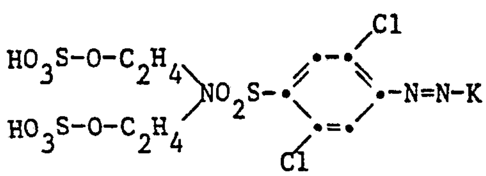 | scharlach |
| 34 | 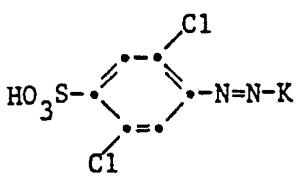 | orange |
| 35 | 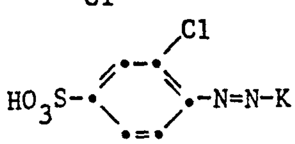 | gelb |
| 36 | 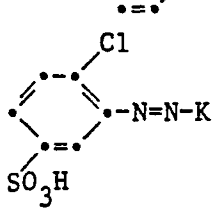 | gelb |
| 37 | 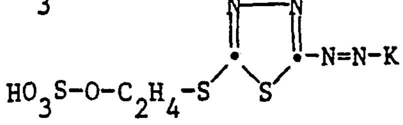 | rot |

**Tabelle IV** (Fortsetzung)

| Nr. | K = 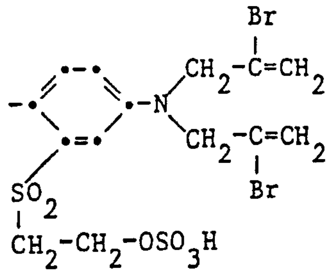 | Nuance auf Baumwolle |
|---|---|---|
| 38 | 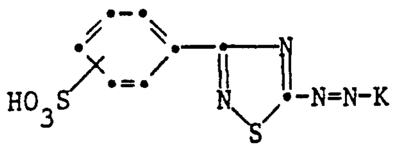 | rot |

| Nr. | K = 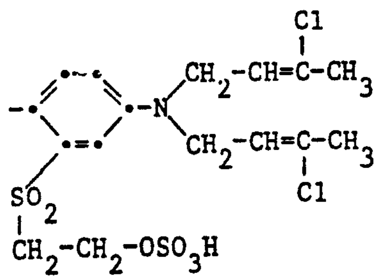 | Nuance auf Baumwolle |
|---|---|---|
| 39 | 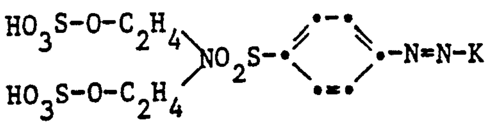 | gelb |
| 40 | 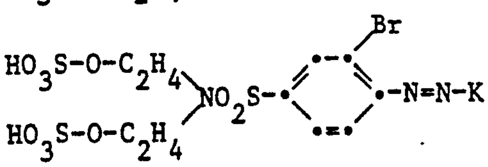 | orange |
| 41 | 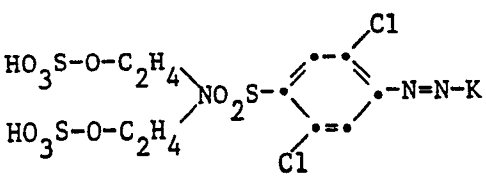 | scharlach |
| 42 | 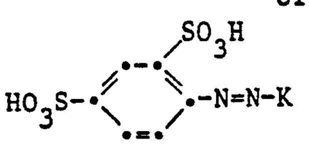 | gelb |

**Tabelle IV** (Fortsetzung)

| Nr. | K = 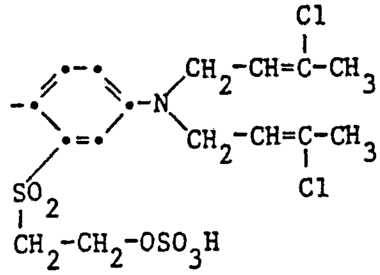 | Nuance auf Baumwolle |
|---|---|---|
| 43 | 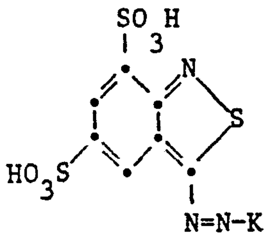 | rot |

| Nr. | K = 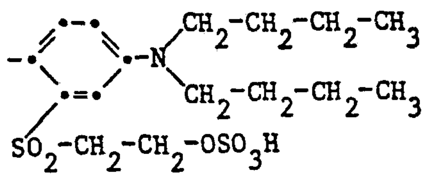 | Nuance auf Baumwolle |
|---|---|---|
| 44 | 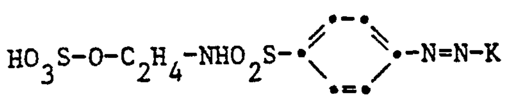 | gelb |
| 45 | 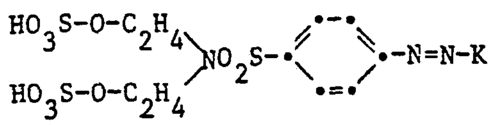 | gelb |
| 46 | 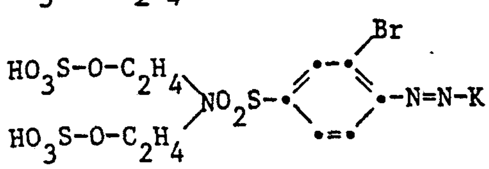 | orange |
| 47 | 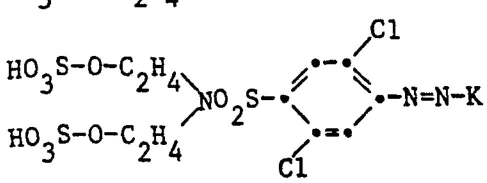 | scharlach |
| 48 | 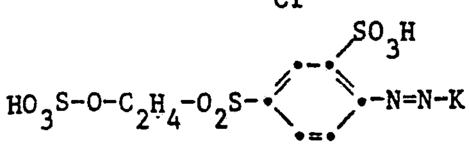 | gelb |

**Tabelle IV** (Fortsetzung)

| Nr. | K = 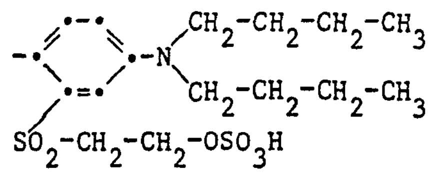 | Nuance auf Baumwolle |
|---|---|---|
| 49 | 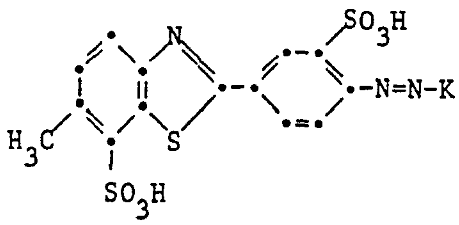 | gelb |
| 50 | 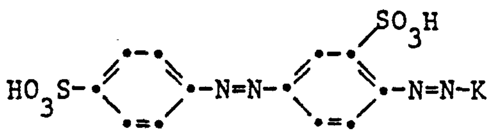 | orange |
| 51 | 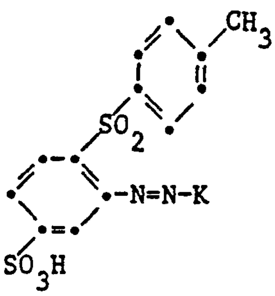 | gelb |

**Beispiel 8**

Man rührt ein Gemisch bestehend aus 20,1 g 3-Amino-phenyl-oxaethylsulfon, 29 g Propansulton und 50 ml Dimethylformamid bei einer Temperatur von 70-72° bis zur vollständigen Alkylierung der Aminogruppe, was sich mittels Dünnschicht-Chromatographie feststellen lässt. Man erhält eine Lösung, welche die Verbindung der Formel

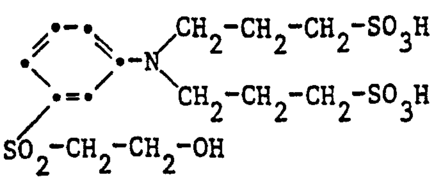

enthält und welche direkt für Azokupplungen verwendet werden kann. Die erhaltenen Farbstoffe lassen sich in bekannter Weise in ihre Sulfoester überführen.

Durch Umsetzung von 3-Amino-phenyloxaethylsulfon mit 2-Bromäthan-sulfo-säure in Aethylenglykolmonomethyläther in Gegenwart von Magnesiumoxyd bei einer Temperatur von 100° erhält man eine Lösung der Verbindung der Formel

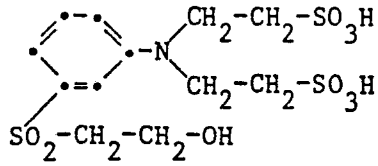

welche in derselben Weise für Azokupplungen verwendet werden kann.

Unter Verwendung dieser Kupplungskomponenten darstellbare Farbstoffe sind in der folgenden Tabelle V aufgeführt. Die bei Verwendung dieser Farbstoffe nach den für Vinylsulfon-Farbstoffe üblichen Färbeverfahren auf Baumwolle erhältlichen Färbungen sind gut licht- und nassecht.

**Tabelle V**

| Nr. | K = 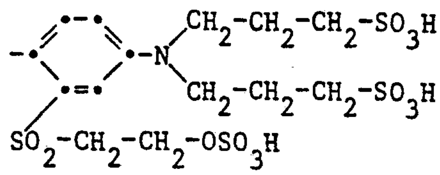 | Nuance auf Baumwolle |
|---|---|---|
| 1 | 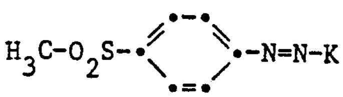 | gelb |
| 2 | 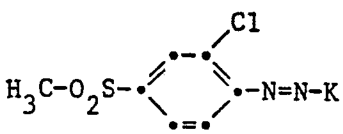 | orange |
| 3 | 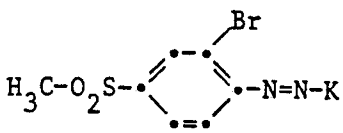 | orange |
| 4 | 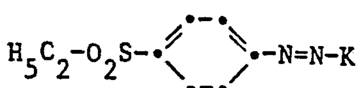 | gelb |
| 5 | 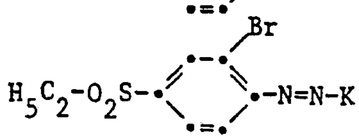 | orange |

**Tabelle V** (Fortsetzung)

| Nr. | K = 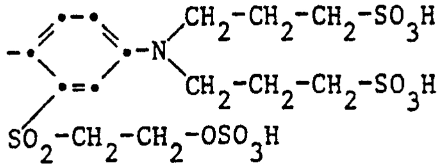 | Nuance auf Baumwolle |
|---|---|---|
| 6 | 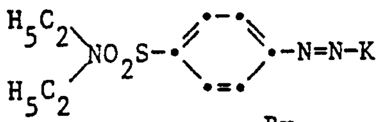 | gelb |
| 7 | 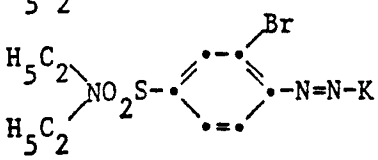 | orange |
| 8 | 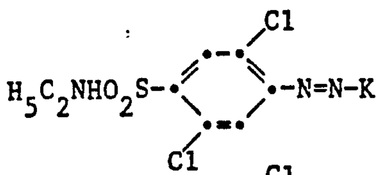 | scharlach |
| 9 | 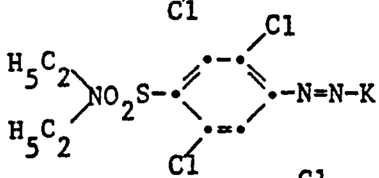 | scharlach |
| 10 | 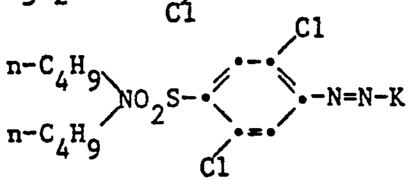 | scharlach |
| 11 | 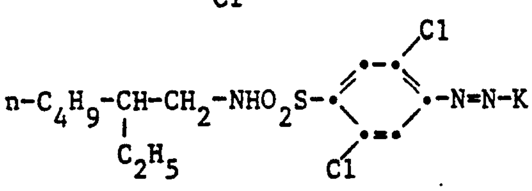 | scharlach |
| 12 | 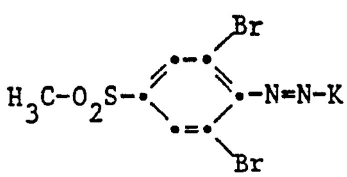 | orange |
| 13 | 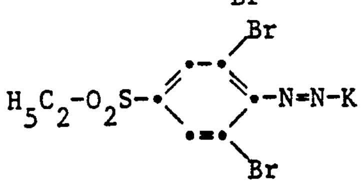 | orange |
| 14 | 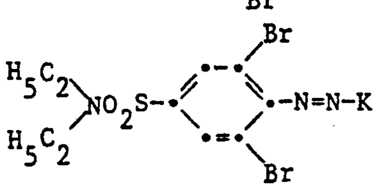 | orange |

**Tabelle V** (Fortsetzung)

| Nr. | K = 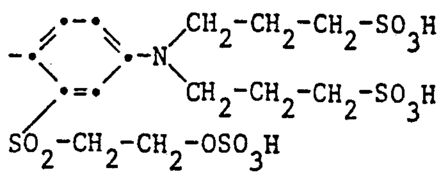 | Nuance auf Baumwolle |
|---|---|---|
| 15 | 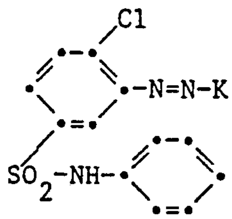 | gelb |
| 16 | 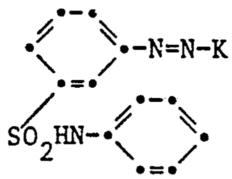 | gelb |
| 17 | 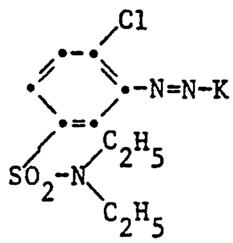 | gelb |
| 18 | 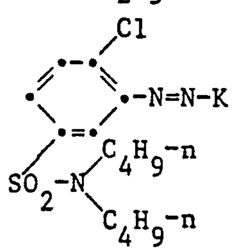 | gelb |
| 19 | 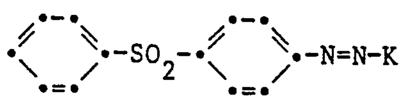 | gelb |
| 20 | 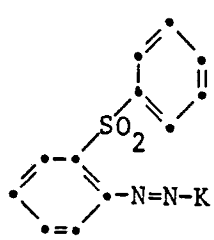 | gelb |

**Tabelle V** (Fortsetzung)

| Nr. | K = 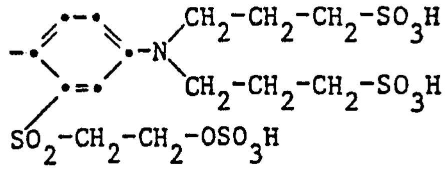 | Nuance auf Baumwolle |
|---|---|---|
| 21 | 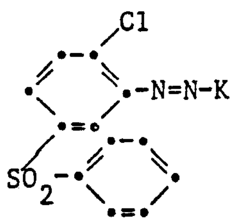 | gelb |
| 22 | 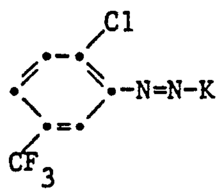 | gelb |
| 23 | 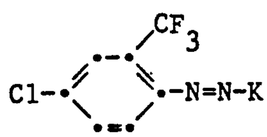 | gelb |
| 24 | 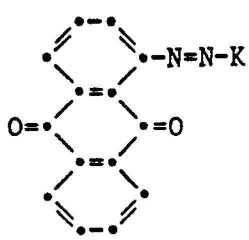 | orange |
| 25 | 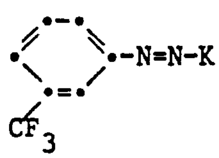 | gelb |
| 26 | 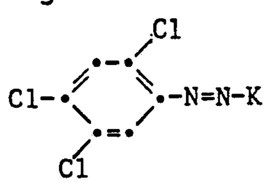 | orange |
| 27 | 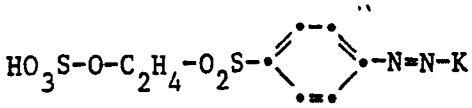 | gelb |

**Tabelle V** (Fortsetzung)

| Nr. | K = 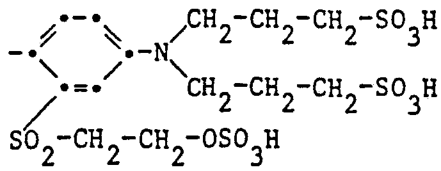 | Nuance auf Baumwolle |
|---|---|---|
| 28 | 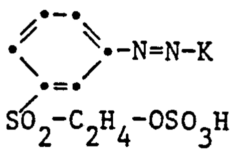 | gelb |
| 29 | 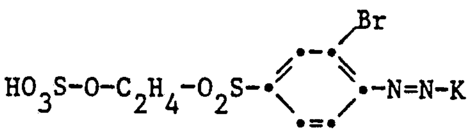 | orange |
| 30 | 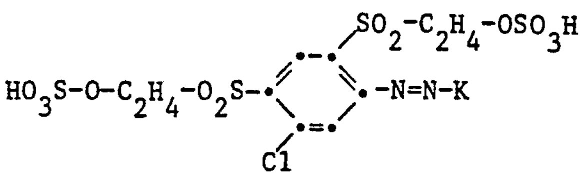 | rot |
| 31 | 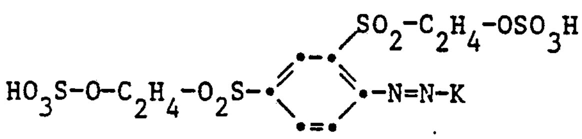 | rot |
| 32 | 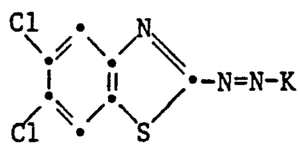 | rot |
| 33 | 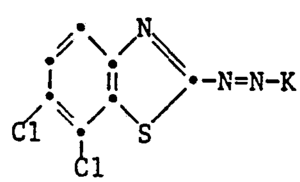 | rot |
| 34 | 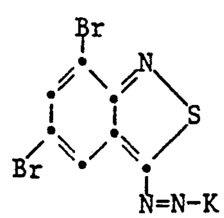 | rot |

**Tabelle V** (Fortsetzung)

| Nr. | K = 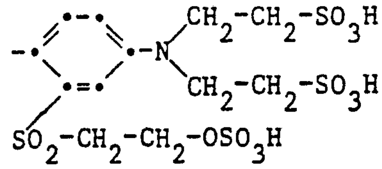 | Nuance auf Baumwolle |
|---|---|---|
| 35 | 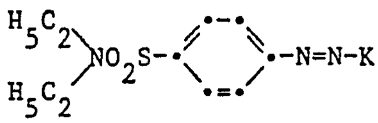 | gelb |
| 36 | 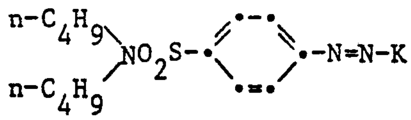 | gelb |
| 37 | 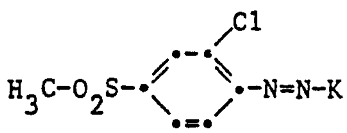 | orange |
| 38 | 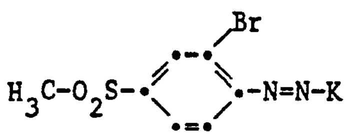 | orange |
| 39 | 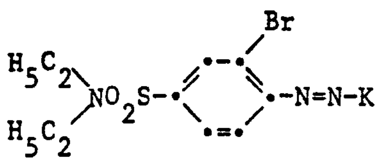 | orange |
| 40 | 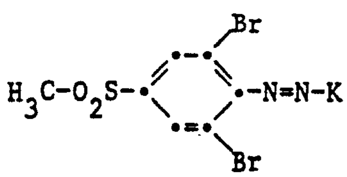 | orange |
| 41 | 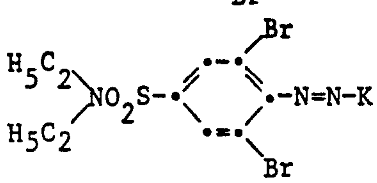 | orange |
| 42 | 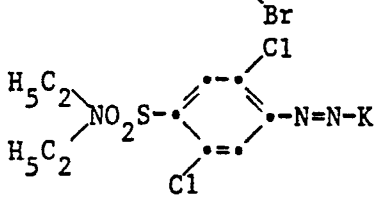 | scharlach |

**Tabelle V** (Fortsetzung)

| Nr. | K = 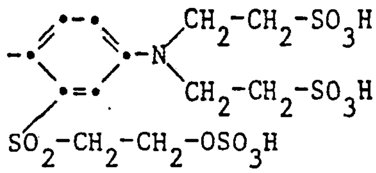 | Nuance auf Baumwolle |
|---|---|---|
| 43 | 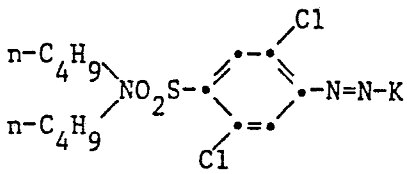 | scharlach |
| 44 | 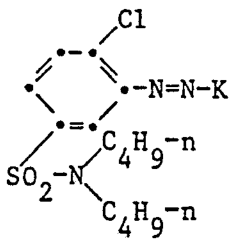 | gelb |
| 45 | 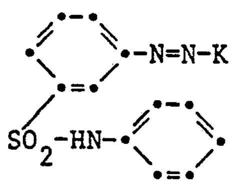 | gelb |
| 46 | 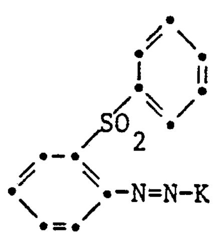 | gelb |
| 47 | 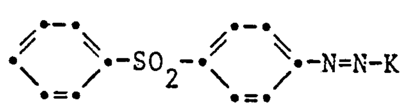 | gelb |
| 48 | 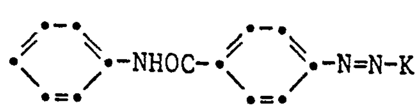 | gelb |
| 49 | 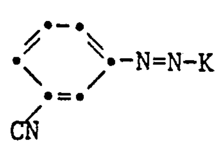 | gelb |

**Tabelle V** (Fortsetzung)

| Nr. | K = 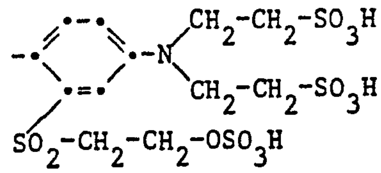 | Nuance auf Baumwolle |
|---|---|---|
| 50 | 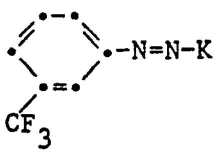 | gelb |
| 51 | 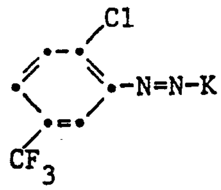 | gelb |
| 52 | 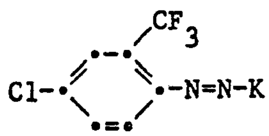 | gelb |
| 53 | 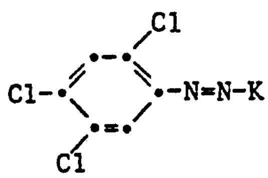 | orange |
| 54 | 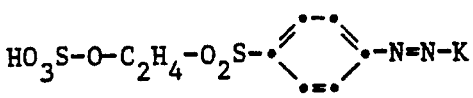 | gelb |
| 55 | 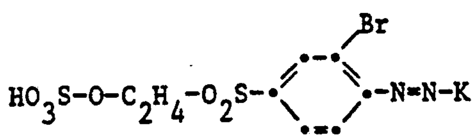 | orange |
| 56 | 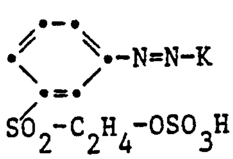 | gelb |
| 57 | 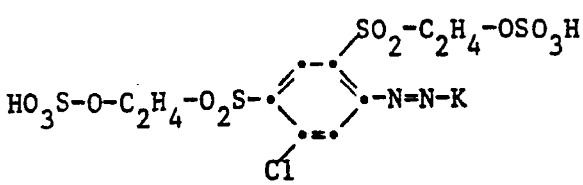 | rot |

**Tabelle V** (Fortsetzung)

| Nr. | K = 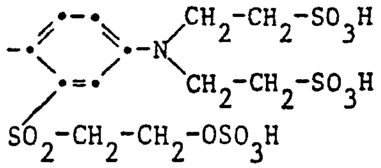 | Nuance auf Baumwolle |
|---|---|---|
| 58 | 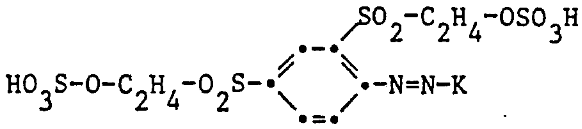 | rot |
| 59 | 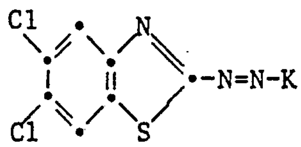 | rot |
| 60 | 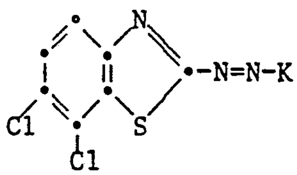 | rot |
| 61 | 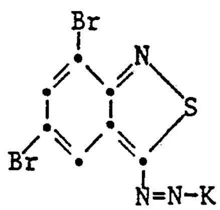 | rot |
| 62 | 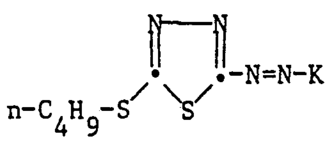 | rot |
| 63 | 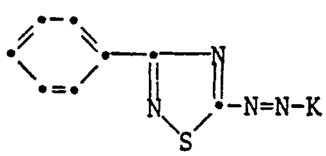 | rot |
| 64 | 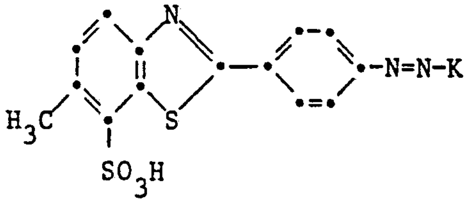 | gelb |

**Beispiel 9**

Man rührt ein Gemisch bestehend aus 20,1 g 3-Amino-phenyl-oxaethylsulfon, 40 ml Essigsäure und 22,1 g Epichlorhydrin während 10 Stunden bei einer Temperatur von 40-42°, worauf man mit Wasser auf einen Gehalt von 80% an Essigsäure verdünnt. Man erhält eine Lösung, welche die Kupplungskomponente der Formel

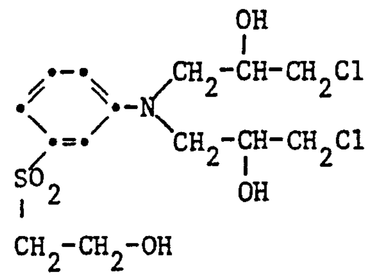

enthält, und welche für Azokupplungen verwendet werden kann. Nach Isolierung lässt sich diese Verbindung in bekannter Weise in den Trisulfoester überführen.

Durch Azokupplung und Sulfatierung erhält man aus dieser Kupplungskomponente die Farbstoffe der folgenden Tabelle VI, welche, nach den für Vinylsulfonfarbstoffe üblichen Färbeverfahren appliziert, auf Baumwolle licht- und nassechte Färbungen ergeben.

**Tabelle VI**

| Nr. | K = 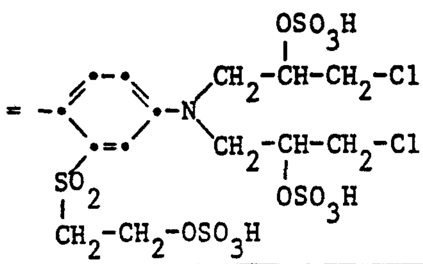 | Nuance auf Baumwolle |
|---|---|---|
| 1 | 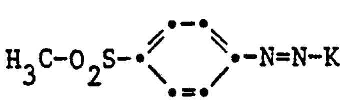 | gelb |
| 2 | 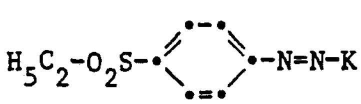 | gelb |

**Tabelle VI** (Fortzetzung)

| Nr. | K = 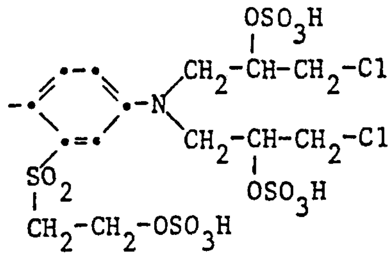 | Nuance auf Baumwolle |
|---|---|---|
| 3 | 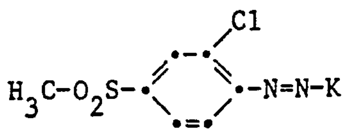 | orange |
| 4 | 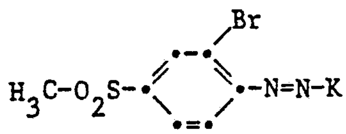 | orange |
| 5 | 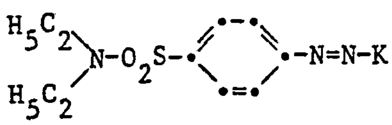 | gelb |
| 6 | 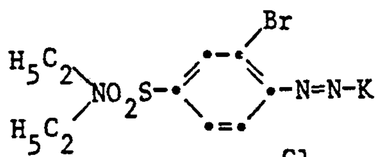 | orange |
| 7 | 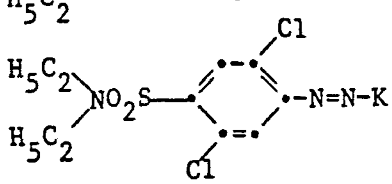 | scharlach |
| 8 | 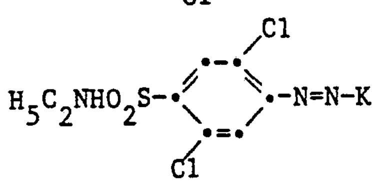 | scharlach |
| 9 | 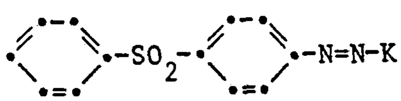 | gelb |
| 10 | 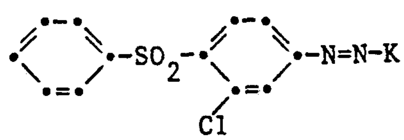 | orange |
| 11 | 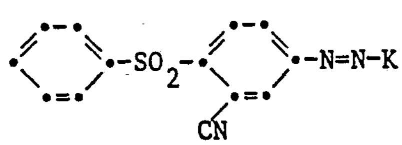 | orange |

**Tabelle VI** (Fortsetzung)

| Nr. | K = 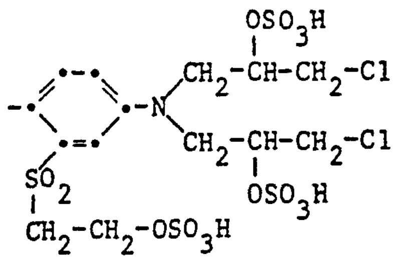 | Nuance auf Baumwolle |
|---|---|---|
| 12 | 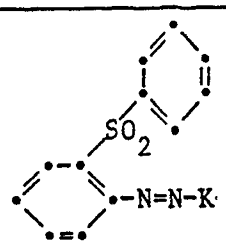 | gelb |
| 13 | 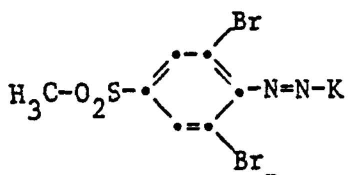 | orange |
| 14 | 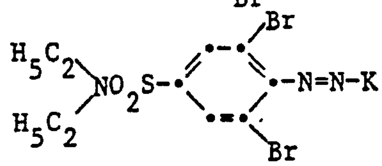 | orange |
| 15 | 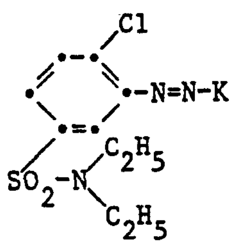 | gelb |
| 16 | 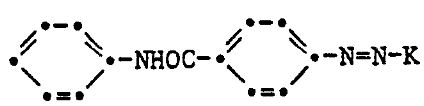 | gelb |
| 17 | 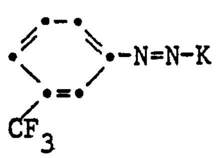 | gelb |
| 18 | 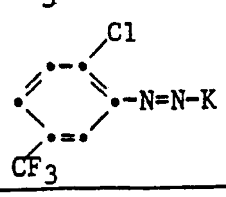 | gelb |

**Tabelle VI** (Fortsetzung)

| Nr. | K = 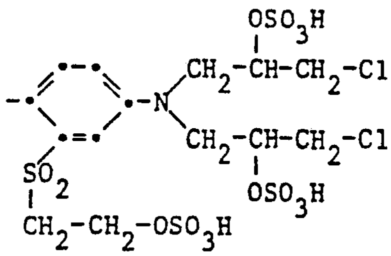 | Nuance auf Baumwolle |
|---|---|---|
| 19 | 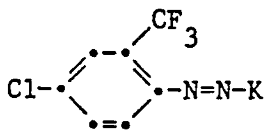 | gelb |
| 20 | 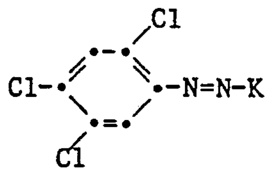 | orange |
| 21 | 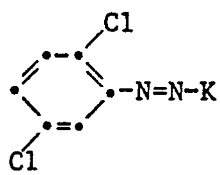 | gelb |
| 22 | 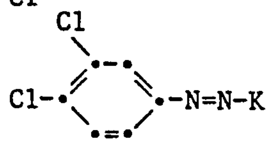 | gelb |
| 23 | 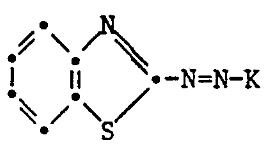 | rot |
| 24 | 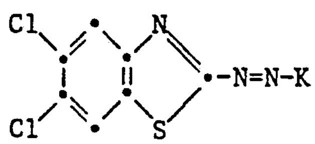 | rot |
| 25 | 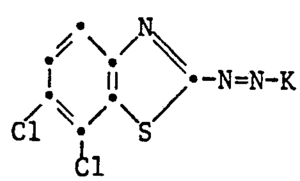 | rot |
| 26 | 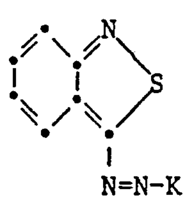 | rot |

**Tabelle VI** Fortsetzung)

| Nr. | | Nuance auf Baumwolle |
|---|---|---|
| | K = 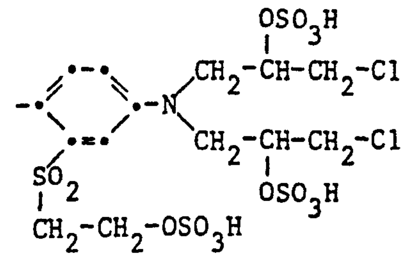 | |
| 27 | 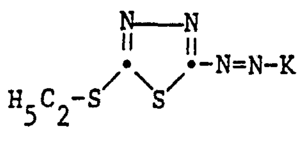 | rot |
| 28 | 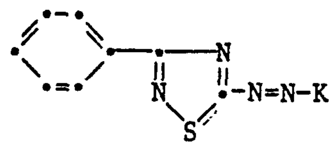 | rot |

**Färbevorschrift I**

2 Teile des gemäss Beispiel 4 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet.

Danach imprägniert man das Gewebe mit einer 20°C warmen Lösung, die pro Liter 4 Gramm Natriumhydroxid und 300 Gramm Natriumchlorid enthält, quetscht auf 75 % Gewichtszunahme ab, dämpft die Färbung während 30 Sekunden bei 100 bis 120°C, spült, seift während einer Viertelstunde in einer 0,3 %igen kochenden Lösung eines nichtionogenen Waschmittels, spült und trocknet.

**Färbevorschrift II**

2 Teile des gemäss Beispiel 4 erhaltenen Farbstoffes werden in 400 Teilen Wasser gelöst, dazu gibt man 1500 Teile einer Lösung, die pro Liter 53 g Natriumchlorid enthält. In dieses Färbebad geht man bei 40°C mit 100 Teilen eines Baumwollgewebes ein, Nach 45 Minuten werden 100 Teile einer Lösung, die pro Liter 16 g Natriumhydroxid und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

**Färbevorschrift III**

4 Teile des gemäss Beispiel 4 erhaltenen Farbstoffes werden in 50 Teilen Wasser gelöst. Dazu gibt man 50 Teile einer Lösung, die pro Liter 5 g Natriumhydroxid und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

**Druckvorschrift**

3 Teile des gemäss Beispiel 4 erhaltenen Farbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsäures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

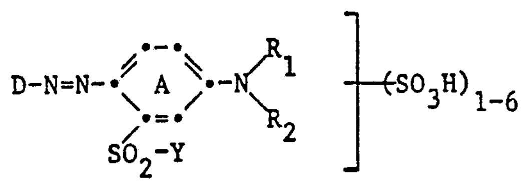

(1) ,

worin D der Rest einer Diazokomponente, $R_1$ und $R_2$ unabhängig voneinander eine gegebenenfalls substituierte Alkyl- oder Alkenylgruppe, Y ein Rest $-CH=CH_2$ oder $-CH_2CH_2-X$,und X eine faserreaktive Abgangsgruppe ist, und der Benzolring A weitersubstituiert sein kann.

2. Reaktivfarbstoffe gemäss Anspruch 1, worin D der Rest einer Diazokomponente der Benzolreihe, Anthrachinonreihe oder heterocyclischen Reihe ist.

3. Reaktivfarbstoffe gemäss einem der Ansprüche 1 und 2, worin $R_1$ und $R_2$ unabhängig voneinander $C_{1-6}$-Alkyl oder $C_{2-6}$-Alkenyl ist, worin die Alkyl- oder Alkenylgruppen durch Halogen, Sulfato oder Sulfo substituiert sein können.

4. Reaktivfarbstoffe gemäss einem der Ansprüche 1 bis 3, worin Y ein Rest $-CH_2CH_2-X$, und X Sulfato ist.

5. Reaktivfarbstoffe gemäss Anspruch 2, worin D ein Benzolrest ist, der durch $C_{1-4}$-Alkyl, $C_{1-4}$-Alkoxy, Carboxy, Halogen, Cyan, Trifluormethyl, Nitro, $C_{1-4}$-Alkylsulfonyl, N-$C_{1-10}$-Alkylaminosulfonyl, N, N-Di-$C_{1-6}$-alkylaminosulfonyl, Cyclohexylaminosulfonyl, N-$C_{1-4}$-Alkyl-N-cyclohexylaminosulfonyl, Phenylaminosulfonyl, das im Phenylring durch $C_{1-4}$-Alkyl, $C_{1-4}$-Alkoxy, Carboxy oder Halogen substituiert sein kann, Phenylsulfonyl, das im Phenylring durch $C_{1-4}$-Alkyl, $C_{1-4}$-Alkoxy, Carboxy oder Halogen substituiert sein kann, Phenoxysulfonyl, das im Phenylring durch $C_{1-4}$-Alkyl, $C_{1-4}$-Alkoxy, Carboxy oder Halogen substituiert sein kann, Phenylsulfonylaminosulfonyl, das im Phenylring durch $C_{1-4}$-Alkyl, $C_{1-4}$-Alkoxy, Carboxy oder Halogen substituiert sein kann, Benzoyl, das im Benzolring durch $C_{1-4}$-Alkyl, $C_{1-4}$-Alkoxy, Carboxy oder Halogen substituiert sein kann, N-$C_{1-10}$-Alkylaminocarbonyl, N,N-Di-$C_{1-6}$-alkylaminocarbonyl, Phenylaminocarbonyl, das im Phenylring durch $C_{1-4}$ -Alkyl, $C_{1-4}$-Alkoxy, Carboxy oder Halogen substituiert sein kann, Phenylazo, das im Phenylring durch $C_{1-4}$-Alkyl, $C_{1-4}$-Alkoxy, Carboxy, Halogen oder Sulfo substituiert sein kann, β-Hydroxyäthylsulfonyl, β-Sulfatoäthylsulfonyl, Vinylsulfonyl, β-Sulfatoäthylaminosulfonyl, N,N-Bis-β-sulfatoäthylamino-sulfonyl, N-$C_{1-4}$-Alkyl-N-β-sulfatoäthylamino-sulfonyl, Benz-thiazolyl-(2), das im Benzolring durch $C_{1-4}$-Alkyl, $C_{1-4}$-Alkoxy, Carboxy, Halogen oder Sulfo substituiert sein kann, oder Sulfo substituiert sein kann.

6. Reaktivfarbstoffe gemäss einem der Ansprüche 2 bis 5, worin $R_1$ und $R_2$ Butyl, 2-Propenyl, β-Chlor-2-propenyl, β-Brom-2-propenyl, γ-Chlor-2-propenyl, γ-Chlor-2-butenyl, β-Sulfatoäthyl, β-Sulfatopropyl, β-Sulfatobutyl, β-Sulfoäthyl oder γ-Sulfopropyl ist.

7. Reaktivfarbstoffe gemäss Anspruch 6, der Formel

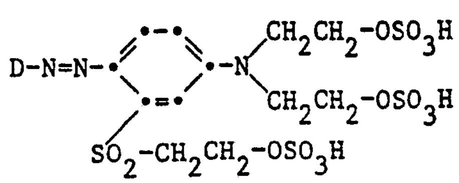

(2) ,

worin D der Rest einer Diazokomponente der Benzolreihe, Anthrachinon-reihe oder heterocyclischen Reihe ist.

8. Reaktivfarbstoffe gemäss Anspruch 6 oder 7, worin D ein gegebenenfalls substituierter Anthrachinon-Rest ist.

9. Reaktivfarbstoffe gemäss Anspruch 8, worin D ein 1-Anthrachinonyl-Rest ist.

10. Reaktivfarbstoffe gemäss Anspruch 6 oder 7, worin D ein gegebenenfalls substituierter Phthalimid-, Benzthiazol-, Benzisothiazol-, Thiadiazol- oder Phthalhydrazid-Rest ist.

11. Reaktivfarbstoffe gemäss Anspruch 10, worin D ein N-Cyclohexyl-phthalimid-(3)- oder -(4)-Rest, ein Benzthiazol-(2)-Rest, der im Benzolring durch $C_{1-4}$-Alkylsulfonyl oder Halogen substituiert sein kann, ein Benzthiazol-(5)- oder -(6)-Rest, der in 2-Stellung durch $C_{1-4}$-Alkylsulfonyl substituiert sein kann, ein 2,1-Benzisothiazol-(3)-Rest, der im Benzolring durch Halogen, Nitro oder Sulfo substituiart sein kann, ein 1,3,4-Thiadiazol-(5)-Rest, der in 2-Stellung durch Phenyl, $C_{1-4}$-Alkylthio, Benzylthio oder β-Sulfatoäthylthio substituiart sein kann, ein 1,2,4-Thiadiazol-(5)-Rest, der in 3-Stellung durch Phenyl oder Sulfophenyl substituiert sein kann, oder ein Phthalhydrazid-(5)-, -(6)-, -(7)- oder -(8)-Rest, der an einem Stickstoffatom durch Phenyl substituiert sein kann, ist.

12. Reaktivfarbstoffe gemäss Anspruch 6, der Formel

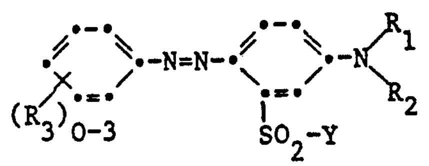

(3) ,

worin $R_3$ für 0 bis 3 Substituenten steht, die unabhängig voneinander Halogen, Cyan, Trifluormethyl, $C_{1-4}$-Alkylsulfonyl, N-$C_{1-8}$-Alkyl-aminosulfonyl, N,N-Di-$C_{1-4}$-alkylaminosulfonyl, Cyclohexylaminosulfonyl, N-Methyl-N-cyclohexylaminosulfonyl, Phenylaminosulfonyl, Carboxyphenylaminosulfonyl, Phenylsulfonyl, Methylphenylsulfonyl, Phenoxysulfonyl, Chlorphenoxysulfonyl, Phenylsulfonylaminosulfonyl, Benzoyl, $C_{1-4}$-Alkylbenzoyl, Carboxybenzoyl, N,N-Di-$C_{1-4}$-alkylamino-carbonyl, Phenylaminocarbonyl, Phenylazo, Sulfophenylazo, β-Hydroxyäthylsulfonyl, β-Sulfatoäthylsulfonyl, Vinylsulfonyl, β-Sulfatoäthylaminosulfonyl, N,N-Bis-β-sulfatoäthylaminosulfonyl, N-Methyl-N-β-sulfatoäthylaminosulfonyl, 6-Methylbenzthiazolyl-(2), 6-Methyl-7-sulfobenzthiazolyl-(2) oder Sulfo sein können, $R_1$, $R_2$ und Y die gleichen Bedeutungen haben wie in Anspruch 6, und die Reaktivfarbstoffe der Formel (3) 1 bis 6 $SO_3H$ Gruppen enthalten.

13. Reaktivfarbstoff gemäss Anspruch 12, der Formel

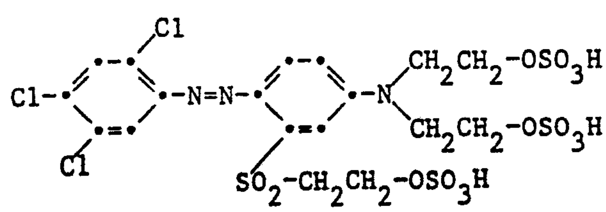

(4).

14. Reaktivfarbstoff gemäss Anspruch 12, der Formel

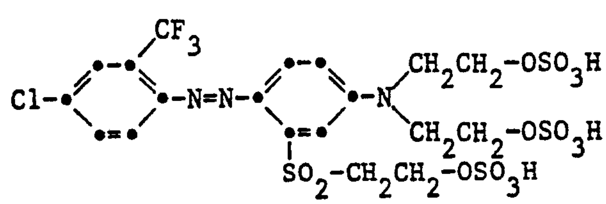

(4a).

15. Verfahren zur Herstellung von Reaktivfarbstoffen gemäss Anspruch 1, dadurch gekennzeichnet, dass man eine Diazokomponente der Formel

$$D-NH_2 \qquad (5)$$

diazotiert und auf-eine Kupplungskomponente der Formel

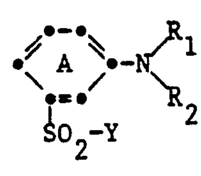

(6) ,

worin Y ein Rest $-CH=CH_2$ oder $-CH_2CH_2-X$, und X eine faserreaktive Abgangsgruppe oder eine Vorstufe derselben ist, und $R_1$, $R_2$ und A die in Anspruch 1 angegebenen Bedeutungen haben, kuppelt, und gegebenenfalls die gewünschte faserreaktive Abgangsgruppe einführt und/oder eine weitere Umwandlungsreaktion anschliesst, wobei die Komponenten der Formeln (5) und (6) so auszuwählen sind und/oder die weiteren Verarbeitungsstufen so auszuführen sind, dass der Endfarbstoff 1 bis 6 $SO_3H$ Gruppen enthält.

16. Verbindungen der Formel

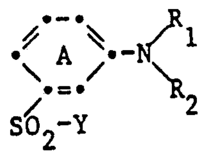 (6) ,

worin $R_1$, $R_2$, Y und A die in Anspruch 15 angegebenen Bedeutungen haben.

17. Verbindungen gemäss Anspruch 16, worin $R_1$ und $R_2$ unabhängig voneinander $C_{1-6}$-Alkyl oder $C_{2-6}$-Alkenyl ist, worin die Alkyl- oder Alkenylgruppen durch Halogen, Hydroxy, Sulfato oder Sulfo substituiert sein können.

18. Verbindungen gemäss Anspruch 16 oder 17, worin Y ein Rest $-CH_2CH_2-X$, und X Hydroxy oder Sulfato ist.

19. Verbindungen gemäss Anspruch 18, worin $R_1$ und $R_2$ Butyl, 2-Propenyl, β-Chlor-2-propenyl, β-Brom-2-propenyl, γ-Chlor-2-propenyl, γ-Chlor-2-butenyl, β-Sulfatoäthyl, β-Sulfatopropyl, β-Sulfatobutyl, β-Sulfoäthyl oder γ-Sulfopropyl ist.

20. Verbindungen gemäss Anspruch 19, worin $R_1$ und $R_2$ β-Hydroxyäthyl oder β-Sulfatoäthyl, Y ein Rest $-CH_2CH_2-X$, und X Hydroxy oder Sulfato ist, und der Benzolring A keine weiteren Substituenten enthält.

21. Verbindung gemäss Anspruch 20 der Formel

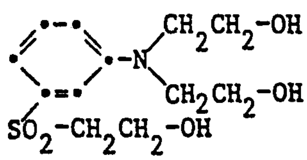 (7) .

22. Verbindung gemäss Anspruch 20, der Formel

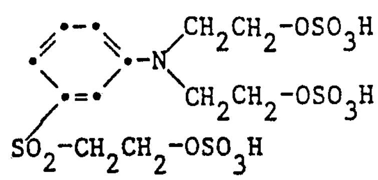 (8).

23. Verfahren zur Herstellung von Verbindungen gemäss Anspruch 16, dadurch gekennzeichnet, dass man Verbindungen der Formel

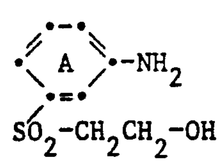 (9)

mit Alkylierungsmitteln umsetzt, und gegebenenfalls die gewünschte faserreaktive Abgangsgruppe einführt und/oder eine weitere Umwandlungsreaktion anschliesst.

24. Verfahren gemäss Anspruch 23, zur Herstellung der Verbindung der Formel (7), dadurch gekennzeichnet, dass man eine Verbindung der Formel

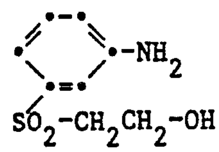

(10)

mit Aethylenoxid im molaren Verhältnis 1:2 umsetzt.

25. Verfahren gemäss den Ansprüchen 23 und 24, zur Herstellung der Verbindung der Formel (8), dadurch gekennzeichnet, dass man die Verbindung der Formel (7) sulfatiert.

26. Verwendung der Reaktivfarbstoffe gemäss den Ansprüchen 1 bis 14, bzw. der gemäss Anspruch 15 erhältlichen Reaktivfarbstoffe zum Färben und Bedrucken.

27. Verwendung gemäss Anspruch 26, zum Färben und Bedrucken von cellulosehaltigem Fasermaterial.

**Revendications**

1. Colorants réactifs de formule

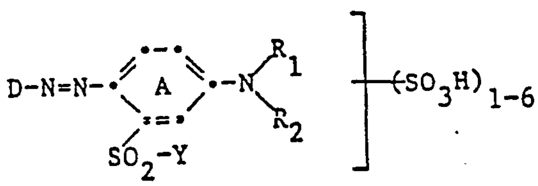

(1) ,

dans laquelle D est le résidu d'un composant diazo, $R_1$ et $R_2$, indépendamment l'un de l'autre, représentent un groupe alkyle ou alcényle éventuellement substitué, Y représente un groupe $-CH=CH_2$ ou $-CH_2CH_2-X$, X étant un groupe partant réactif vis-à-vis des fibres, et le noyau benzénique A pouvant être encore substitué.

2. Colorants réactifs conformes à la revendication 1, dans lesquels D est le résidu d'un composant diazo de la série du benzène, de la série de l'anthraquinone, ou de la série hétérocyclique.

3. Colorants réactifs conformes à l'une des revendications 1 et 2, dans lesquels $R_1$ et $R_2$, indépendamment l'un de l'autre, représentent un groupe alkyle en $C_{1-6}$ ou alcényle en $C_{2-6}$, ces groupes alkyle ou alcényle pouvant être substitués par des atomes d'halogène ou des groupes sulfato ou sulfo.

4. Colorants réactifs conformes à l'une des revendications 1 à 3, dans lesquels Y est un résidu $-CH_2CH_2-X$, X étant un groupe sulfato.

5. Colorants réactifs conformes à la revendication 2, dans lesquels D est un résidu benzénique, qui peut être substitué par un atome d'halogène, un groupe alkyle en $C_{1-4}$, alcoxy en $C_{1-4}$, carboxyle, cyano, trifluorométhyle, nitro, sulfo, alkylsulfonyle en $C_{1-4}$ N-(alkyle en $C_{1-10}$)-aminosulfonyle, N,N-di-(alkyle en $C_{1-6}$)-aminosulfonyle, cyclohexylaminosulfonyle, N-(alkyle en $C_{1-4}$)-N-cyclohexylaminosulfonyle, phénylaminosulfonyle qui peut être substitué sur le noyau phényle par un groupe alkyle en $C_{1-4}$, alcoxy en $C_{1-4}$, carboxyle, ou par un atome d'halogène, phénylsulfonyle qui peut être substitué sur le noyau phényle par un groupe alkyle en $C_{1-4}$, alcoxy en $C_{1-4}$, carboxyle, ou par un atome d'halogène, phénoxysulfonyle qui peut être substitué sur le noyau phényle par un groupe alkyle en $C_{1-4}$, alcoxy en $C_{1-4}$, carboxyle, ou par un atome d'halogène, phénylsulfonylaminosulfonyle qui peut être substitué sur le noyau phényle par un groupe alkyle en $C_{1-4}$, alcoxy en $C_{1-4}$, carboxyle, ou par un atome d'halogène, benzoyle qui peut être substitué sur le noyau benzène par un groupe alkyle en $C_{1-4}$, alcoxy en $C_{1-4}$, carbonyle, ou par un atome d'halogène, N-(alkyle en $C_{1-10}$)-aminocarbonyle, N,N-di-(alkyle en $C_{1-6}$)-aminocarbonyle, phénylaminocarbonyle qui peut être substitué sur le noyau phényle par un groupe alkyle en $C_{1-4}$, alcoxy en $C_{1-4}$, carboxyle, ou par un atome d'halogène, phénylazo qui peut être substitué sur le noyau phényle par un groupe alkyle en $C_{1-4}$, alcoxy en $C_{1-4}$, carboxyle, sulfo, ou par un atome d'halogène, β-hydroxyéthylsulfonyle, β-sulfatoéthylsulfonyle, vinylsulfonyle, β-sulfatoéthylaminosulfonyle, N,N-bis-β-sulfatoéthylaminosulfonyle, N-(alkyle en $C_{1-4}$)-N-β-sulfatoéthylaminosulfonyle, ou benzothiazolyl- 2 , qui peut être substitué sur le noyau benzène par un groupe alkyle en $C_{1-4}$, alcoxy en $C_{1-4}$, carboxyle, sulfo, ou par un atome d'halogène.

6. Colorants réactifs selon l'une des revendications 2 à 5, dans lesquels $R_1$ et $R_2$ représentent des groupes butyle, 2-propényle, β-chloro-2-propényle, β-bromo-2-propényle, γ-chloro-2-propényle, γ-chloro-2-butényle, β-sulfatoéthyle, β-sulfatopropyle, β-sulfatobutyle, β-sulfoéthyle ou γ-sulfopropyle.

7. Colorants réactifs conformes à la revendication 6, de formule

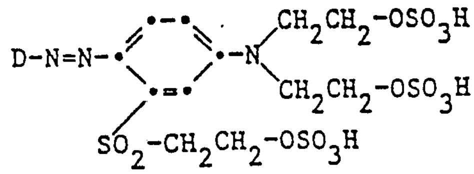

(2) ,

dans laquelle D est le résidu d'un composant diazo de la série du benzène, de la série de l'anthraquinone, ou de la série hétérocyclique.

8. Colorants réactifs conformes à la revendication 6 ou 7, dans lesquels D est un résidu d'anthraquinone éventuellement substitué.

9. Colorants réactifs conformes à la revendication 8, dans lesquels D est un résidu 1-anthraquinonyle.

10. Colorants réactifs conformes à la revendication 6 ou 7, dans lesquels D est un résidu, éventuellement substitué, de phtalimide, de benzothiazole, de benzoisothiazole, de thiadiazole, ou de phtalhydrazide.

11. Colorants réactifs conformes à la revendication 10, dans lesquels D est un résidu N-cyclohexyl-phtalimidyl-3 ou -4, un résidu benzothiazolyl-2 qui peut être substitué sur le noyau benzène par un groupe alkylsulfonyle en $C_{1-4}$ ou un atome d'halogène, un résidu benzothiazolyl-5 ou -6 qui peut être substitué en position 2 par un groupe alkylsulfonyle en $C_{1-4}$, un résidu 2,1-benzoisothiazolyl-3 qui peut être substitué sur le noyau benzène par un atome d'halogène ou par un groupe nitro ou sulfo, un résidu 1,3,4-thiadiazolyl-5 qui peut être substitué en position 2 par un groupe phényle, alkylthio en $C_{1-4}$, benzylthio ou β-sulfatoéthylthio, un résidu 1,2,4-thiadiazolyl-5, qui peut être substitué en position 3 par un groupe phényle ou sulfophényle, ou un résidu phtalhydrazidyl-5, -6, -7, ou -8 qui peut être substitué à l'atome d'azote par un groupe phényle.

12. Colorants réactifs conformes à la revendication 6, de formule

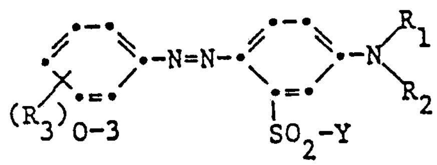

(3) ,

dans laquelle $R_3$ représente de 0 à 3 substituants qui, indépendamment l'un de l'autre, peuvent être des atomes d'halogène ou des groupes cyano, trifluorométhyle, alkylsulfonyle en $C_{1-4}$, N-(alkyle en $C_{1-8}$)-aminosulfonyle, N,N-di-(alkyle en $C_{1-4}$)-aminosulfonyle, cyclohexylaminosulfonyle, N-méthyl-N-cyclohexylaminosulfonyle, phénylaminosulfonyle, carboxyphénylaminosulfonyle, phénylsulfonyle, méthylphénylsulfonyle, phénoxysulfonyle, chlorophénoxysulfonyle, phénylsulfonylaminosulfonyle, benzoyle, (alkyle en $C_{1-4}$)-benzoyle, carboxybenzoyle, N,N-di-(alkyle en $C_{1-4}$)-aminocarbonyle, phénylaminocarbonyle, phénylazo, sulfophénylazo, β-hydroxyéthylsulfonyle, β-sulfatoéthylsulfonyle, vinylsulfonyle, β-sulfatoéthylaminosulfonyle, N,N-bis-β-sulfatoéthylaminosulfonyle, N-méthyl-N-β-sulfatoéthylaminosulfonyle, 6-méthylbenzothiazolyl-2, 6-méthyl-7-sulfobenzo-thiazolyl-2 ou sulfo, $R_1$, $R_2$ et Y, ayant les mêmes significations que dans la revendication 6, et les colorants réactifs de formule (3) comportant de 1 à 6 groupes $-SO_3H$.

13. Colorant réactif conforme à la revendication 12, de formule

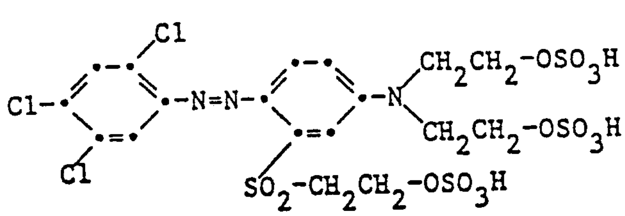

(4).

14. Colorant réactif conforme à la revendication 12, de formule

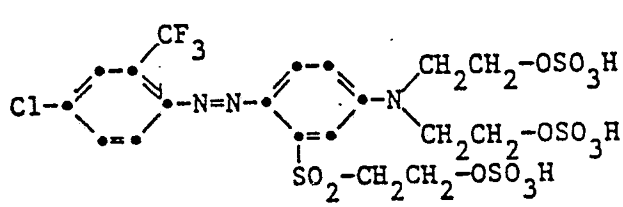

(4a).

15. Procédé de préparation des colorants réactifs conformes à la revendication 1, caractérisé en ce que l'on diazote un composant diazo de formule

$$D - NH_2 \quad (5)$$

et qu'on le copule sur un composant de copulation de formule

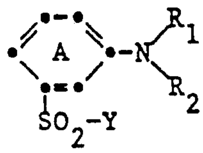

(6) ,

dans laquelle Y est un résidu $CH=CH_2$ ou $-CH_2CH_2-X$, X étant un groupe partant réactif vis à-vis des fibres ou un précurseur d'un tel groupe, et $R_1$, $R_2$ et A ont les significations indiquées dans la revendication 1, et que, éventuellement, on introduit le groupe partant réactif vis-à-vis des fibres désiré et/ou on ajoute une autre réaction de transformation, les composants de formules (5) et (6) devant être choisis, et/ou les autres étapes de traitement devant être effectuées, de telle façon que le colorant final comporte de 1 à 6 groupes $-SO_3H$.

16. Composés de formule

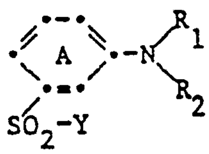

(6) ,

dans laquelle $R_1$, $R_2$, Y et A ont les significations indiquées dans la revendication 15.

17. Composés conformes à la revendication 16, dans lesquels $R_1$ et $R_2$, indépendamment l'un de l'autre, représentent des groupes alkyle en $C_{1-6}$ ou alcényle en $C_{2-6}$, lesdits groupes alkyle ou alcényle pouvant être substitués par des atomes d'halogène ou des groupes hydroxyle, sulfato ou sulfo.

18. Composés conformes à la revendication 16 ou 17, dans lesquels Y est un résidu $-CH_2CH_2-X$, X étant un groupe hydroxyle ou sulfato.

19. Composés conformes à la revendication 18, dans lesquels $R_1$ et $R_2$ sont des groupes butyle, 2-propényle, β-chloro-2-propényle, β-bromo-2-propényle, γ-chloro-2-propényle, γ-chloro-2-butényle, β-sulfatoéthyle, β-sulfatopropyle, β-sulfatobutyle, β-sulfoéthyle ou γ-sulfopropyle.

20. Composés conformes à la revendication 19, dans lesquels $R_1$ et $R_2$ représentent des groupes β-hydroxyéthyle ou β-sulfatoéthyle, Y est un groupe $-CH_2CH_2-X$, X étant un groupe hydroxyle ou sulfato, et le noyau benzénique A ne comporte pas d'autres substituants.

21. Composé conforme à la revendication 20, de formule

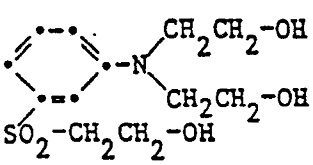

(7) .

22. Composé conforme à la revendication 20, de formule

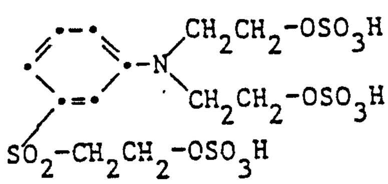

(8).

23. Procédé pour la préparation de composés conformes à la revendication 16, caractérisé en ce que l'on fait réagir des composés de formule

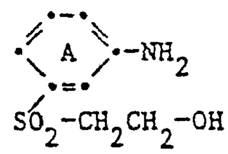 (9)

avec des agents d'alkylation, et que, éventuellement, on introduit le groupe partant réactif vis-à-vis des fibres désiré, et/ou on effectue une autre réaction de transformation.

24. Procédé conforme à la revendication 23, pour la préparation du composé de formule (7), caractérisé en ce que l'on fait réagir un composé de formule

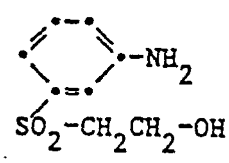 (10)

avec de l'oxyde d'éthylène, en un rapport molaire de 1:2.

25. Procédé conforme aux revendications 23 et 24, pour la préparation du composé de formule (8), caractérisé en ce que l'on sulfate le composé de formule (7).

26. Utilisation des colorants réactifs conformes aux revendications 1 à 14, ou bien des colorants réactifs que l'on peut obtenir conformément à la revendication 15, pour des teintures et des impressions.

27. Utilisation conforme à la revendication 26, pour la teinture et l'impression de matériaux fibreux contenant de la cellulose.

**Claims**

1. A reactive dye of the formula

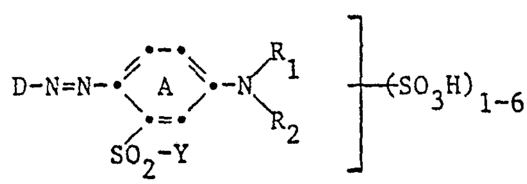 (1) ,

wherein D is the radical of a diazo component, $R_1$ and $R_2$ are each independently an unsubstituted or substituted alkyl or alkenyl group, Y is a $-CH=CH_2$ or $-CH_2CH_2-X$ radical in which X is a fibre-reactive radical, and the benzene ring A may be further substituted.

2. A reactive dye according to claim 1, wherein D is the radical of a diazo component of the benzene, anthraquinone or heterocyclic series.

3. A reactive dye according to either of claims 1 or 2, wherein $R_1$ and $R_2$ are each independently $C_1$-$C_6$alkyl or $C_2$-$C_6$alkenyl, wherein the alkyl or alkenyl groups may be substituted by halogen, sulfato or sulfo.

4. A reactive dye according to any one of claims 1 to 3, wherein Y is a $-CH_2CH_2-X$ radical in which X is sulfato.

5. A reactive dye according to claim 2, wherein D is a radical of the benzene series which may be substituted by $C_1$-$C_4$alkyl, $C_1$-$C_4$alkoxy, carboxy, halogen, cyano, trifluoromethyl, nitro, $C_1$-$C_4$alkylsulfonyl, N-$C_1$-$C_{10}$alkylaminosulfonyl, N,N-di($C_1$-$C_6$)alkylaminosulfonyl, cyclohexylaminosulfonyl, N-$C_1$-$C_4$alkyl-N-cyclohexylaminosulfonyl, phenylaminosulfonyl which may be substituted in the phenyl ring by $C_1$-$C_4$alkyl, $C_1$-$C_4$alkoxy, carboxy or halogen, phenylsulfonyl which may be substituted in the phenyl ring by $C_1$-$C_4$alkyl, $C_1$-$C_4$alkoxy, carboxy or halogen, phenoxysulfonyl which may be substituted in the phenyl ring by $C_1$-$C_4$alkyl, $C_1$-$C_4$alkoxy, carboxy or halogen, phenylsulfonylaminosulfonyl which may be substituted in the phenyl ring by $C_1$-$C_4$alkyl, $C_1$-$C_4$alkoxy, carboxy or halogen, benzoyl which may be substituted in the benzene ring by $C_1$-$C_4$alkyl, $C_1$-$C_4$alkoxy, carboxy or halogen, N-$C_1$-$C_{10}$alkylaminocarbonyl, N,N-di($C_1$-$C_6$)alkylaminocarbonyl, phenylaminocarbonyl which may be substituted in the phenyl ring by $C_1$-$C_4$alkyl, $C_1$-$C_4$alkoxy, carboxy or halogen, phenylazo which may be substituted in the phenyl ring by $C_1$-$C_4$alkyl, $C_1$-$C_4$alkoxy, carboxy, halogen or sulfo, β-hydroxyethylsulfonyl, β-sulfatoethylsulfonyl, vinylsulfonyl, β-sulfatoethylaminosulfonyl, N,N-bis-β-sulfatoethylaminosulfonyl, N-$C_1$-$C_4$alkyl-N-β-sulfatoethylaminosulfonyl, benzthiazol-2-yl which may be substituted in the benzene ring by $C_1$-$C_4$alkyl, $C_1$-$C_4$alkoxy, carboxy, halogen or sulfo; or by sulfo.

6. A reactive dye according to any one of claims 2 to 5, wherein $R_1$ and $R_2$ are butyl, 2-propenyl, β-chloro-2-propenyl, β-bromo-2-propenyl γ-chloro-2-propenyl, γ-chloro-2-butenyl, β-sulfatoethyl, β-sulfatopropyl, β-sulfatobutyl, β-sulfoethyl or γ-sulfopropyl.

7. A reactive dye according to claim 6, of the formula

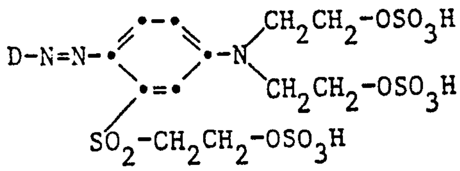

(2) ,

wherein D is the radical of a diazo component of the benzene, anthraquinone or heterocyclic series.

8. A reactive dye according to either of claims 6 or 7, wherein D is an unsubstituted or substituted anthraquinone radical.

9. A reactive dye according to claim 8, wherein D is a 1-anthraquinon-yl radical.

10. A reactive dye according to either of claims 6 or 7, wherein D is an unsubstituted or substituted phthalimide, benzthiazole, benzisothiazole, thiadiazole or phthalohydrazide radical.

11. A reactive dye according to claim 10, wherein D is a radical selected from the group consisting of N-cyclohexylphthalimid-3- or -4-yl, benzthiazol-2-yl which may be substituted in the benzene ring by $C_1$-$C_4$alkylsulfonyl or halogen, benzthiazol-5- or -6-yl which may be substituted in the 2-position by $C_1$-$C_4$alkylsulfonyl, 2,1-benziso-thiazol-3-yl which may be substituted in the benzene ring by halogen, nitro or sulfo, 1,3,4-thiadiazol-5-yl which may be substituted in the 2-position by phenyl, $C_1$-$C_4$alkylthio, benzylthio or β-sulfatoethylthio, 1,2,4-thiadiazol-5-yl which may be substituted in the 3-position by phenyl or sulfophenyl, or 5-, 6-, 7- or 8-phthalo-hydrazide which may be substituted at one nitrogen atom by phenyl.

12. A reactive dye according to claim 6, of the formula

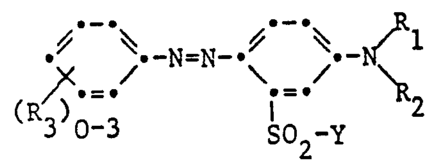

(3) ,

wherein $R_3$ denotes 0 to 3 substituents which may each independently be halogen, cyano, trifluoromethyl, $C_1$-$C_4$alkylsulfonyl, N-$C_1$-$C_8$alkyl-aminosulfonyl, N,N-di($C_1$-$C_4$)alkylaminosulfonyl, cyclohexylaminosulfonyl, N-methyl-N-cyclohexylaminosulfonyl, phenylaminosulfonyl, carboxyphenylaminosulfonyl, phenylsulfonyl, methylphenylsulfonyl, phenoxysulfonyl, chlorophenoxysulfonyl, phenylsulfonylaminosulfonyl, benzoyl, $C_1$-$C_4$alkylbenzoyl, carboxybenzoyl, N,N-di($C_1$-$C_4$)alkyl-aminocarbonyl, phenylaminocarbonyl, phenylazo, sulfophenylazo, β-hydroxyethylsulfonyl β-sulfatoethylsulfonyl, vinylsulfonyl, β-sulfatoethylaminosulfonyl, N,N-bis-β-sulfatoethylaminosulfonyl, N-methyl-N-β-sulfatoethylaminosulfonyl, 6-methylbenzthiazol-2-yl, 6-methyl-7-sulfobenzthiazol-2-yl or sulfo, $R_1$, $R_2$ and Y are as defined in claim 6 and the reactive dyes of the formula (3) contain 1 to 6 $SO_3H$ groups.

13. A reactive dye according to claim 12, of the formula

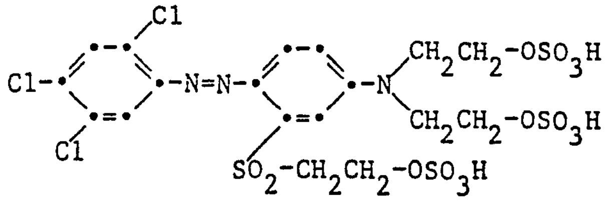

(4).

14. A reactive dye according to claim 12, of the formula

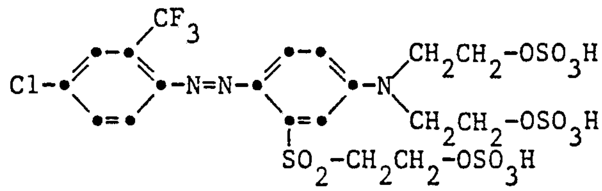

(4a).

15. A process for the preparation of a reactive dye according to claim 1, which comprises diazotising a diazo component of the formula
$D - NH_2$ (5)

$$D - NH_2 \quad (5)$$

and coupling the diazonium compound to a coupling component of the formula

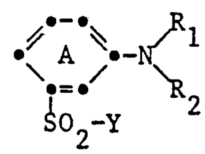

(6) ,

wherein Y is a $-CH=CH_2$ or $-CH_2CH_2-X$ radical, X is a fibre-reactive leaving group or a precursor thereof, and $R_1$, $R_2$ and A are as defined in claim 1 and if necessary, introducing the desired fibre-reactive leaving group and/or subsequently carrying out a further conversion reaction, the components of the formulae (5) and (6) being so chosen and/or the further process steps being so carried out that the final dye contains 1 to 6 $SO_3H$ groups.

16. A compound of the formula

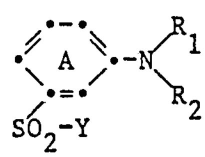

(6) ,

wherein $R_1$, $R_2$, Y and A are as defined in claim 15.

17. A compound according to claim 16, wherein each of $R_1$ and $R_2$ are each independently $C_1$-$C_6$alkyl or $C_2$-$C_6$alkenyl, wherein the alkyl or alkenyl groups may be substituted by halogen, hydroxy, sulfato or sulfo.

18. A compound according to either of claims 16 or 17, wherein Y is a $-CH_2CH_2-X$ radical in which X is hydroxy or sulfato.

19. A compound according to claim 18, wherein $R_1$ and $R_2$ are butyl, 2-propenyl, β-chloro-2-propenyl, β-bromo-2-propenyl, γ-chloro-2-propenyl, γ-chloro-2-butenyl, β-sulfatoethyl, β-sulfatopropyl, β-sulfatobutyl, β-Sulfoethyl or γ-Sulfopropyl.

20. A compound according to claim 19, wherein $R_1$ and $R_2$ are β-hydroxyethyl or β-sulfatoethyl, Y is a $-CH_2CH_2-X$ radical in which X is hydroxy or sulfato, and the benzene ring A is not further substituted.

21. A compound according to claim 20, of the formula

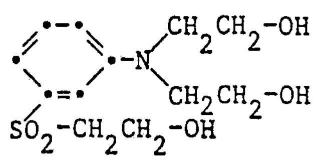

(7) .

22. A compound according to claim 20, of the formula

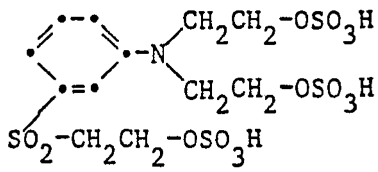

(8).

23. A process for the preparation of a compound according to claim 16, which comprises reacting a compound of the formula

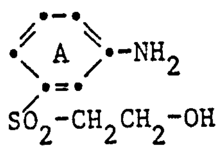

(9)

with an alkylating agent and, if necessary, introducing the desired fibre-reactive leaving group and/or carrying out a further conversion reaction.

24. A process according to claim 23 for the preparation of a compound of the formula (7), which comprises reacting a compound of the formula

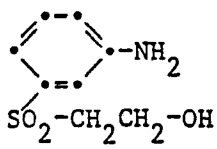

(10)

with ethylene oxide in the molar ratio 1:2.

25. A process according to either of claims 23 or 24 for the preparation of the compound of the formula (8), which comprises sulfating the compound of the formula (7).

26. Use of a reactive dye as claimed in any one of claims 1 to 14, or which is obtainable according to claim 15, for dyeing or printing.

27. Use according to claim 26, for dyeing cellulose fibres.